# EUROPEAN PATENT SPECIFICATION

(11) **EP 3 945 778 B1**
(45) Date of publication and mention of the grant of the patent: **21.10.2026**
(21) Application number: 20784674.2
(22) Date of filing: 31.03.2020
(51) Int. Cl.: A01G 9/02, E04B 1/32, E04C 1/39, E04C 2/52

(54) **PANEL-MODULAR LAYERED WALL SYSTEM FOR SHAPING SPATIAL STRUCTURES**
PANEELMODULARES GESCHICHTETES WANDSYSTEM ZUR FORMUNG RÄUMLICHER STRUKTUREN
SYSTÈME DE PAROI EN COUCHES MODULAIRE À PANNEAUX POUR LA MISE EN FORME DE STRUCTURES SPATIALES

(30) Priority: 02.04.2019 PL 42949619
(43) Date of publication of application: 09.02.2022
(73) Proprietor: Fundacja Artystyczna Im. Tadeusza Kalinowskiego, 61-746 Poznan (PL)
(72) Inventor: KALINOWSKI, Adam, 61-746 Pozna (PL)
(86) International application number: PCT/PL2020/000036
(87) International publication number: WO 2020/204737

(56) References cited:
- EP-B1- 2 856 859
- WO-A1-2017/203543
- AU-B2- 534 395
- JP-A- 2007 274 948
- US-A1- 2008 066 393
- US-A1- 2008 236 036
- US-A1- 2011 113 685
- US-B1- 7 627 983

## Description

The subject of the invention is a panel-modular system for shaping spatial structures, intended for erecting a load-bearing construction for vegetation. The solution provides climatic comfort for users characterized by oxygenated, fine dust free, cooled and moist air, and enabling plant production in difficult spatial and climatic conditions. The panel-modular system is a new solution which is used for space development and that can be installed in the form of independent and self-supporting structures in space or it can be an element of existing or planned building structures.

An example of the modular system solution where containers with plants are placed parallel to the ground surface are e.g. documents no. CN, 106677084 in which a green soundproof wall is revealed, which consists of a concrete slab, sound absorbing panels and planting pots, and at least one surface of the side panel of the concrete slab is provided with strip-shaped protrusions, and a groove for installing each sound absorbing panel or each planting pot is created between each two adjacent strips. The sound absorbing panels are attached to the upper edges of the grooves through a binder, and the sound absorbing panels and the concrete slab form a niche that absorbs resonated sound.

In turn, the patent description no. KR 101425187 reveals the construction in which plants are placed in containers at an angle of about 45 degrees to the ground surface. In this system there is an additional installation supplying the plants with water and, optionally, with fertilizer. At the same time, excess water can be transported and stored for a time of shortage. Each water transporting hosepipe is connected to a water flow regulator.

In this type of solution, containers are used where the biologically active surface is small, the containers are rather higher than wider in shape, and standing out at a small distance from the wall surface, or which are completely hidden in it, as revealed in the description no. WO2017058611. Water is pumped into each container or supplied by means of the drip line and the excess water is drained through drains to the ground with the plants in the containers below.

These systems do not involve the use of rainwater. The issue of exposure of containers or wall plane to sunlight is not considered. For example, in descriptions no. CN_205912565 and the abovementioned KR101425187, separate containers with plants are placed at an angle of approximately 45 degrees to the ground, where plants, as they develop, turn upwards to the upright position for better light exposure, and the container has only the function of holding the plant in position, without supporting or modifying the exposure to sunlight.

Sometimes the modules with plants are placed perpendicularly to the ground surface. For example, in patent no. EP2309839, where a modular, box-like structure containing the base with plants is used, which, when placed perpendicularly to the ground, make plants turn upwards at 90 degrees as they grow. These systems do not involve the efficient use of rainwater. Further systems are disclosed in US 2011/113685 A1, US 2008/066393 A1, US 2008/236036 A1, WO 2017/203543 A1.

It should be noted that the well-known green wall systems and solutions indicated above assume the use of separate containers of a homogeneous, repeatable shape, with a small surface area in the form of buckets, oblong tubs or regular polygons containing the base on which plants grow and where water is supplied and which are placed at a short distance from the elevation of the building in the even, vertical plane on the frame of the structure, mounted to the wall or integrated into the wall.

Known from the patent literature and practice examples of system solutions in the field of so-called green wall are dedicated to the installation on the wall surface of the building, and the feasibility of using elements of these systems to build a self-contained or self-supporting object in space, especially of a closed or semi-closed form, with a clearly defined climatic function, is not possible with the components of these systems, as they lack the load-bearing structure provided by the present solution which combines the load-bearing structure with optimal conditions for vegetation of plants.

The invention is defined by claim 1, wherein the dependent claims define preferred embodiments thereof.

Depending on an example of an execution, apart from the panels containing the substrate with plants, another panels can be equipped with a transparent filling or can be covered with a mesh with a different weave density, or can be made as 100% opaque panels, e.g. photovoltaic panels within a given structure.

The system consists mostly of elements with fixed parameters as well as several variable ones, used in 6 variants of the solution.

The panels are selected in such a way that the elements of the system consist of 2 whole panels, 4 half ones and preferably 8 complementary ones for the possible use on a rhombus frame. In addition, the system consists of - cooperating with panels - panel joining strips, panel docking strips, cantilevers with a fixed deflection angle or variable deflection angle within the structure in the range of 10 to 90 degrees, the lock of panel cantilevers, two types of module frames: flat and bent in the central part in the range of 0 to 25 degrees in the shape of a rhombus and a rectangle and frames resulting from division, frame couplers, silos with an inclination angle from 30 to 90 degrees, as well as preferably panel bands.

The panels which are not bound by bands appear exclusively as devoid of plants, with a full or transparent filling, thus that they can be mounted on the module frame in a different, closer sequence of distances between the planes of the panels.

In addition, as a separate arrangement, according to an embodiment of the invention the system comprises the irrigation system for plants and the substrate for plants as well as the method of planting them are selected within the structure according to the bipolar key.

Only the sloping cylindrical load-bearing structure consists of 5 frames of modules with a variable angle Alpha within one structure with a predefined inclination angle of the structure. The flat load-bearing plane on which the panels of the system are mounted, according to an embodiment of the invention, is made up of flat frames of modules in the shape of a rhombus or halves and quarters of a rhombus, which are joined together sideways, or in the shape of a rectangle and frames constituting halves of its shape, which are joined together sideways by means of couplers, and on them panels are mounted, filled with the substrate with plants which another adjacent layers are joined by vertical silos and/or with panels with a transparent or 100% opaque filling. In this case a combination into the layers is done by means of cantilevers with a 90 degree supporting angle. At the same time, the load-bearing plane as a whole is assembled vertically to the ground and forms the vertical structure of the layered wall.

In another example of an execution, combining into layers is done by means of cantilevers with a supporting angle of 15-90 degrees, then the load-bearing plane, as a whole, is assembled diagonally to the ground and forms the sloping structure of the layered wall.

*In the case when the construction of the structure is made with the use of module frames in the shape of a rhombus and a half rhombus with couplers with angles in the range of 25 to 90 degrees or in the shape of a rectangle and a square, bent symmetrically in the middle part at an angle in the range of 0 to 25 degrees, they are joined sideways diagonally or with a shift by means of couplers and together they form the arched-barrel load-bearing frame of the layered wall on which the panels filled with the substrate with plants are mounted, joined by vertical silos, and*/*or panels with a transparent or 100% opaque filling, combined into layers directed perpendicularly to the arch of the structure and horizontally to the ground supported by cantilevers with a supporting angle in the range of 10 to 90 degrees, which form the arched-barrel structure of the layered wall.*

*When module frames in the shape of a trapezium or a rhombus, bent symmetrically in the central part at an angle in the range of 0 to 25 degrees, are joined together sideways by means of couplers, creating together the self-supporting spatial spherical structure of the layered wall, on which panels filled with the substrate with plants are mounted, these panels are joined by vertical silos, and*/*or panels with a transparent or 100% opaque filling, which are combined together into layers directed perpendicularly to the arch of the structure and horizontally to the ground supported by cantilevers with a supporting angle in the range of 10 to 90 degrees, then these module frames together form the spherical structure of the layered wall.*

*In another example of an execution, the cylindrical spatial load-bearing plane formed from flat or vertically bent module frames in the shape of a rhombus or halves and quarters of a rhombus, which are joined together sideways diagonally or in the shape of a rectangle, and frames constituting half of its shape, which are joined sideways by means of couplers and on it panels are mounted, filled with the substrate with plants, joined by vertical silos, and*/*or with panels with a transparent or 100% opaque filling, combined into layers by means of cantilevers with a supporting angle of 90 degrees, which,* as *a whole, are vertically mounted to the ground, form the cylindrical structure of the layered wall.*

*In another example* of *an execution, the cylindrical sloping spatial load-bearing plane made out of flat module frames in the shape* of a *rectangle and* a *trapezium which are joined sideways by means of couplers, on whose spatial plane panels filled with the substrate with plants are mounted, joined by vertical silos, and*/*or with panels with a transparent or 100% opaque filling, joined in layers, using cantilevers with a supporting angle in the range of 10 to 90 degrees, which,* as a *whole, are mounted diagonally to the ground and form the cylindrical sloping structure of the layered wall.*

*At the same time,* within the structures of the front of the panels, starting from the layer of panels placed closest to the ground up to the top one, the panels are in one plane, while the surfaces of horizontal cross-sections of the panels do not coincide with each other in a top view , but pass each other. This is a feature that distinguishes this solution from existing panel modular solutions in the field of Green Wall.

The distances between the surface of the planes of the panels/layers, depending on the example of an execution, are either fixed or different for the layers of vertical, sloping, arched-barrel, spherical, cylindrical and sloping cylindrical structure. This is the second major structural difference between the present solution and the cited patent solutions.

In the example of an execution in which the modules are built in the sloping and sloping cylindrical structure, the panels filled with the substrate with plants are preferably placed up to two pieces, one above the other on the rhombus or rectangular frame, in the range of 15 to 70 degrees of inclination of the sloping structure to the ground surface, while in another favourable example of an execution, with an inclination angle of the frame from 70 to 90 degrees, the panels filled with the substrate with plants can be placed up to three pieces, one above the other on three levels on the module frame.

Within the sloping structure, a supporting angle of the cantilevers is fixed depending on an adopted inclination angle of the structure in the range of 15 to 90 degrees.

Within the sloping structure, the fronts of the panels, starting from the panel layer placed closest to the ground level up to the top one, are in one plane regardless whether the distances between the surfaces of the panel layers are regular or variable. The distances between the surface of the planes of panels/layers can be fixed or variable for sloping structure layers, depending on the example of an execution.

*In the* case of using the module frame with a fixed deflection angle within a given arched layered wall structure, going from the bottom to the top part of the arch of the construction towards the inside part of the arch, the distances between the layers made up of panels mounted on frames gradually decrease.

Where the module frames used to build the arched structure have different deflection angles in the range of 0 to 25 degrees within a single structure of this type, the arch curvature of the structure is either steep or flattened, depending on the way the module frames with a variable angle are mounted, which affects the distances between the planes of the panels/layers and their fronts. As the distances between the fronts of the panels, starting from the lowest layer at ground level and moving upwards in the internal direction of the arch of the construction, gradually increase to achieve the greatest distance between the front of the penultimate panel and the last one at the top of the arch of the arched construction, natural clearances are created by which light penetrates into the structure and illuminates it.

In the lower part of the arch of the construction, there are then up to three panels filled with the substrate with plants, mounted one above the other on the module frames, while higher, in the direction of curving of the arch of the construction, the number of panels is reduced to two and at the top there is one panel on the module frame.

In the case of employing the layers with the use of transparent panels, with colourless or coloured fillings, or using a mesh with different weave density, or only whole, 100% opaque panels, which are lower compared to panels with the substrate with plants, the panels are closely adjacent, without space between the panels for the growth of plants. The panels are then placed in any sequence on the structure the way the mounting holes for the cantilevers supporting panels enable it.

In another example of an execution, on the bent frame in the shape of a rhombus, a rectangle or a trapezium in the range of 0 to 25 degrees, on which (of which) the load-bearing plane of arched or spherical construction is built, but also on the vertical and sloping construction of the layered wall, only transparent panels are used, with a colourless or coloured filling or with a mesh of different weave density, or only whole, 100% opaque panels in layers one above the other, joined by cantilevers with a supporting angle from 10 to 90 degrees.

In the case of the load-bearing construction of the arched layered wall, this construction is made in such a way that the module frames in the shape of a rhombus or a half rhombus in the vertical and horizontal position or in the shape of a rectangle/square and a half of the frames of these shapes, bent symmetrically in the middle part in the range of 0 to 25 degrees, are joined sideways diagonally or with a shift and together form the arched structure which can be used in the building industry while maintaining fast assembly with couplers in the form of clamps. Such a construction in another example of an execution is covered with a transparent patch or a 100% opaque one - with a roof.

At the same time, the joining gap between whole, half or complementary panels is filled with a joining strip equipped with expansion joints located on both sides of the strip and is placed by pressing between the edges of the panels.

*In the example* of *an execution in which the load-bearing construction has the shape* of a *sphere,* the layers of the panels are supported on cantilevers and are joined in the corners by means of a joining bolt. The panels resting on the cantilevers are additionally secured with the joining bolt which joins the cantilever to the docking strip mounted on the underside of the panels. The gaps between the joined panels in the corners are reduced in the direction from the layer at the top of the sphere to the bottom, where the diameter of the sphere is longest. The gaps are filled with the joining strip in the shape of a triangle.

The set of frames used in the sloping cylindrical structure has a variable angle Beta for the structure with a given inclination angle, at the necessary minimum of 5 module frames per a quarter of a circle or an ellipse which is the base of the cylinder.

In the case of the sloping frame structure, the module frames are connected one to another diagonally, with the whole side of the frame of a rhombus, a rectangle or a trapezium, preferably with a horizontal/vertical shift, they are additionally filled with a trellis for stiffening and form a regular load-bearing frame of the layered wall structure. In this way, the whole panels are adjacent to the whole ones and the half panels to the half ones, which is an optimal solution as it allows for a variety of shaping of the whole modules and thus of the panel layers. It would be possible to adopt a different rule of joining the sides of rhombus frames only up to a half of their length, but by joining them in this way, large panels would join with small ones, which would limit the number of combinations of their joining, apart from that, if the need be, additional supplementary modules would have to be created in order to level the wall edge of the structure. Frames in the shape of a rhombus or a rectangle/square are screwed together wholly sideways, one to another, creating a uniform plane.

Depending on the scale or design needs, one type of frames of both shapes can be used in the layered wall structure or only one frame shape can be used in the configuration of the solution variants. In order to obtain greater rigidity of the vertical load-bearing frame with the use of square module frames, the frames may be joined in such a way that they are shifted in the adjacent layer by half horizontally or vertically analogously to the arrangement of brick layers in traditional building construction (staggering brick).

On the elements of vertical trellises of the frames in the shape of a rhombus and a rectangle and the frames in shapes resulting from their division by 1/2, 1/4, 1/8, there are mounting holes for cantilevers at regular distances from the top to the bottom of the frame which correspond to the spacing of mounting hooks for the cantilevers supporting panels in 4 types of the layered wall structures, thus the distances between the created planes of panel layers can be freely adjusted within these structures. The set of frames used in the cylindrical sloping structure has a variable angle Beta for the structure with a given inclination angle at the necessary minimum of 5 frames per a quarter of a circle or an ellipse being the base of the cylinder. The frames of the modules are joined by means of couplers, in particular made of thick, profiled sheet metal, bent into a "u" shape with two welded threaded pins located in the inner part of the clamp. The holes, in which are inserted the threaded pins of the clamp joining both frames, are placed on the perimeter of the whole frame at regular intervals. On the opposite side of the hole into which the pin enters, there is a mounting hole, larger to accommodate a socket wrench for the self-locking nut which is screwed onto the pin. The mounting hole is located on the outside of the structure where the cantilevers and panels on the frames are mounted. The frames forming spherical or cylindrical structures (vertical and sloping) are joined by means of couplers bent in the middle at angles in the range of 0 to 25 degrees according to the applied deflection of the frames of trapeziums or rhombuses.

According to an embodiment of the invention, the modules (layers) of the system, when regular distances between the planes of panels/layers within the structure are assumed, are differentiated by a configuration of six basic panels of four types of shape, two whole ones in the shape of an isosceles triangle and a semicircle, placed in the middle of a rhomboidal, square or trapezoidal horizontal frame and four half ones, two in the shape of a triangle in the left and right arrangement (this is one triangular shape rotated left and right, resulting from the division of the whole triangular panel) and a quarter of a circle being a half of a semi-circular panel (the shape of a quarter of a circle rotated left and right) placed symmetrically in a horizontal position at the same distance above and below the central panel. The ratio of the width of the whole panel to the half panel is 2:1, while the ratio of the complementary panels is 4:1. The depth of all panels except 4 (out of a total of 8) complementary panels is the same. The width of the whole panel is identical to the width of the frame of a rhombus and a square.

Out of six basic panels of two sizes used, a total of 32 variants of the basic module on the frame in the shape of a rhombus can be configured, not counting the halves and quarters of the panels used to enclose supplementary modules for possible levelling the edges or corners of the layered wall structure. On the square frame, on the other hand, there are as many as 320 possible configurations while using only 6 panels.

The half panels in the shape of a quarter of a circle or halves of panel in the shape of a isosceles triangle can be, in the favourable example of an execution, combined into the whole panel of irregular shapes by means of a mounting batten that rigidly joins both panels.

Each panel consists of the base and bands, keeping the moist substrate with plants inside the panel. The height of the bands is normally 1/4 of the panel depth when the panels are mounted on three levels on the module frame and up to 1/3 of the panel depth when using a double or single panel on the module frame. The bottom and bands of the panel are lined with an insulating layer of polystyrene and insulating foil in particular, which are covered with the layer of expanded clay and the substrate with plants. The bands, placed in the guide bar screwed to the edge of the panel, encircle each whole panel around, except for parts of its both sides along the panel width, and "truncated" on the sides at an angle of 90 degrees to the plane of the module frame, by which they butt the adjacent panels on both sides at more than 1/3 of the depth of each panel. In this way, they form a horizontal layer, stretching along the layered wall structure. The half panels are joined sideways on one side at 1/3 of the panel depth and on the other side along the entire panel depth. Each panel, by connecting with the adjacent panels, creates a long level, stretching along the entire layered wall structure.

The joining sides between whole or half panels are filled with a joining strip, which is pressed into place by means of expansion joints, filling a notch for the strip placed between the edges of the panels. The joining strip is equipped with drains that take away excess water onto the layers of panels located below within the structure. This element, together with the possibility of taking out the panel from the cantilevers when the lock is released, enables quick disassembly of the entire panel and its contents. The joining strip with drains can be used together with vertical silos or only if the silos are not used within a given structure or are used to join only some layers of the structure. In the spherical structure and cylindrical structures, the joining strip used to fill the gaps between panels is in the shape of an isosceles triangular with expansion joints placed on the underside, which are removed when redundant, fitting closely to the size of the gap between the joined panels in the corners with a joining pin. The panels are supported by cantilevers of three different sizes, adjusted to the shape and size of the panels, which are mounted in the mounting holes placed on the elements of the vertical trellises of the frames in the shape of a rhombus and a rectangle and the shapes resulting from their division, at regular distances from the top to the bottom of the frame, which correspond to the spacing of mounting cantilevers supporting the panels. Thus, the distances between the created planes of the panel layers can be freely shaped within the 3 types of layered wall structures according to the optimal climatic objective.

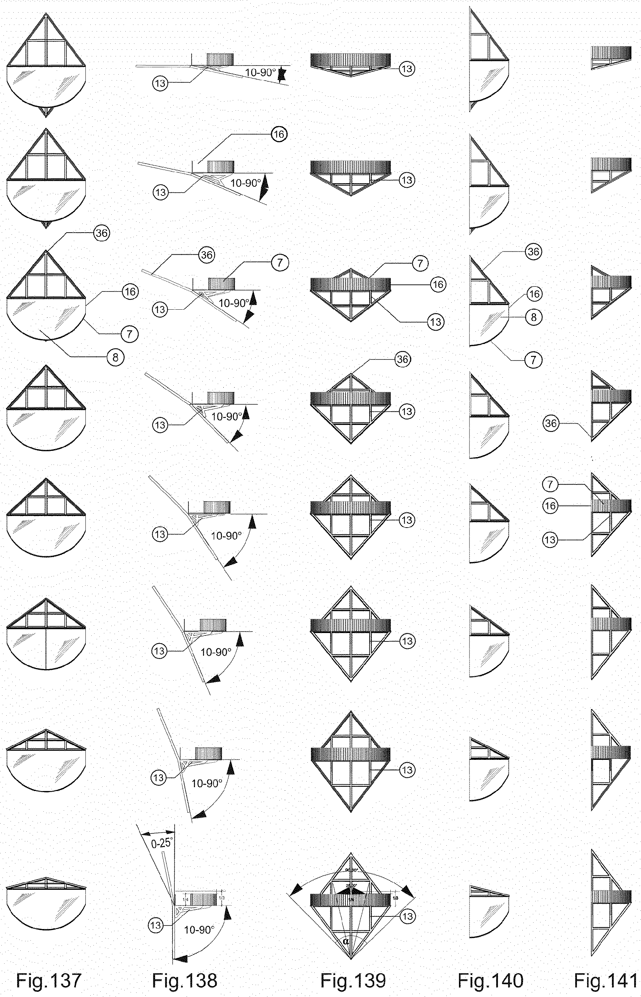

Apart from cantilevers with a 90 degree supporting angle, used in vertical structures with open, closed and semi-closed arrangements, the changing element is a supporting angle of the panels by means of cantilevers which must be adjusted to a desired inclination angle of the sloping wall in the range of 15 to 90 degrees or to the assumed curvature of the arch of the arched-barrel or spherical wall. In the latter two, the inclination angle of the cantilever's foot will be variable within the construction of the arch in the range of 10 to 90 degrees, depending on the position of module frames and a given layer of panels in the arch section of the arched-barrel or spherical structure, in order to maintain ever-horizontal position of the panels, regardless of the angle of the position of a given module frame on the arch of the structure in relation to the ground (Fig.138, elem.13,36).

Each cantilever inserted into the frame holes is locked by means of the hook tines. Partial or full replacement of the panels at any level of the layered wall structure, while leaving the cantilevers plugged into the structure, will be made possible by docking strips mounted at the bottom of the panels into which the guide bars of the cantilevers enter.

In each of the assumed examples of an execution, the substrate layer is not less than 15 cm thick. The silos joining the layers are fully filled on three sides, while their front is covered with a fine weave mesh. The silos have an inclination angle of 30 to 90 degrees as seen in the side view of the structure and can be used in all types of the layered wall construction. The panels with a hole for the silo, together with the silo located there, are placed, at the most, every third, preferably every second whole panel without a hole, within a given layer made of panels. The silos have holes for combs of rods, which are inserted on three sides at fixed distances at the height of the silo.

The irrigation system is installed in all the module panels forming together layers and the panel-modular system. Preferably on each layer there is a separate controller which doses the water quantity due to the requirements of the plants placed there. The irrigation system is connected to a continuous water supply or a refillable tank with a pump, guaranteeing a continuous water supply to the irrigation system. The water supply varies depending on the season of the year, needs and type of plants, e.g. shade-loving plants or photophilic plants (heliophytes), location of the spatial and climatic structure. Rainwater is obtained thanks to the appropriate scale of panel planes and configuration of layers, and through vertical silos it is distributed within the combined system of the layered wall, which in the case of regular rainfall may result in periodic shutdown of the irrigation system.

*On the layered wall created with the help of the system according to the invention,* plants are placed according to the principle of bipolarity. On the outer and better illuminated parts of the panel, photophilic plants are placed, and on the inner and lower layers of a given structure, shade-loving plants are placed. In all variants of the structures, plants will adapt well, so all of them will be useful for plant production, while the structures: sloping flat, sloping cylindrical, spherical, arched-barrel, including the combination of these structures are particularly useful for the application of photophilic plants on the structure due to the excellent illumination conditions of all layers of these variants of the layered wall structures.

The selection of the set of plants should take into account the following spatial conditions: - the climatic conditions of a given location (the set of plants for the location of the structure in a dry and hot climate will be different from that in a temperate climate). - Location of the structure in relation to geographical directions: - Features of the construction of a given structure, e.g. the light of clearance between the levels, which should be taken into account when selecting plants in terms of height or the location of appropriate plants in different parts of the structure, particularly due to the intensity of natural lighting: - Taking into account the immediate architectural environment. Plants when they grow struggle with the limitations of the structure's dimensions and fill the spaces between layers. Thus, in addition to their function of oxygenation and moistening, they act as a natural filter retaining the moist and cool air inside the closed structure, and also not allowing a certain amount of dust to pass from the outside of the object into the inside, or from one side to the other when the structure is semi-closed or open and separates, for example, a car lane from the pedestrian track or constitutes a green façade of a building behind which the windows of the building may be situated.

Using six variants of the solution, out of the elements of the vertical, sloping, arched, spherical, cylindrical and sloping cylindrical layered wall structure, it is possible to construct the structures with an open, semi-closed and closed arrangement with or without a supporting frame and as a result it is created an autonomous object, completely self-supporting, providing climatic comfort or serving to plant production in difficult spatial and climatic conditions. The solution ensures that climatic comfort is achieved especially inside the closed and semi-closed structure and can have a measurable impact on the climate of the urban environment. Closed structures can be particularly useful for achieving climate comfort in the area with a high level of sunshine, e.g. southern Europe in summer, in a temperate climate, as well as in the region of a hot and dry climate without the use of costly cooling by means of the air-conditioning system, where there is no closed or semi-closed areas in public space in the form of a pavilion or a hall providing such parameters. Lowering the temperature by about 5-7 degrees Celsius and increasing the moistness by about 20-30% is a big microclimatic gain for the structure user, especially in public spaces in cities, used for example in the form of green tunnels for pedestrian transfer. The optimisation of illumination of the joined panels in horizontal and vertical layers by means of silos, the substrate layer sufficiently thick and saturated with minerals and the use of rainwater in addition to continuous irrigation are advantages that enable effective vegetation (plant production) in conditions of urbanised space completely deprived of biologically active surface.

The solution of the layered wall combining two variables: horizontal and vertical is a fusion of their functionalities as it enables its shaping in a vertical and horizontal direction, which fully ensures the realisation of the assumed goals of the solution. In the vertical direction by variably optimal adjustment of spacing between layers in terms of application of appropriate plant matter of different types of vegetation or size. By combining the horizontal layers with the vertical silos filled with the substrate, the system achieves three goals: A). Free transfer of moisture within the entire layered wall structure. Rainwater will complement the irrigation system and it can be assumed that it will be switched off during heavy rainfall because there is a free transfer of moisture from the upper levels that collect the largest amount of rainwater to the lower levels of the structure. B). It enables the transfer of microorganisms within the whole structure. C). Free expansion of the root system. The silos can link all or selected layers of the structure. While in the horizontal direction, the configuration of the layers of the structure is based on the appropriate combination of 6 basic panels of different shapes and sizes and complementary shapes in order to optimize the illumination of the panel surfaces, rainwater harvesting and due to the type of plant matter applied on the panels.

The solution is characterized by a horizontal layered arrangement, which allows for natural plant growth, as opposed to Green Wall solutions, where plants are planted parallel, at an angle of about 45 degrees or perpendicularly to the ground surface in small containers. The combination of the joined panels into layers, placed horizontally with the vertical load-bearing structure, provides facilities for vegetative plants, given the volume of the substrate, and by combining the panels in long series of layers with different edges, placed one above the other, creates good conditions for the vegetation of plants crammed into the confined spaces of the layered structure. The fair-sized ecosystem, which is each level of the layered wall (the panels are joined together at more than 1/3 of their depth), allows plants to vegetate collectively, to increase a mass of the root system, to maintain better moisture and thus better resistance to overdrying and freezing in winter compared to the well-known Green Wall solutions, where without heating the root system in a temperate climate in winter, plants may not survive it. The system of horizontal layers is additionally strengthened by filled with the substrate vertical silos that join these layers. The summer extremes in a dry and hot climate are also a challenge, where the plants are exposed to intense sunlight and overdrying. The thickness of the substrate depends on the distance between the layers, which can vary within a single structure with the use of the system and which can also be scaled up, thus thickness can vary from circa 15 cm to circa 35 cm or more and the substrate is located at the level of the entire layer formed by the panels, thus the rooting layer of the plants is much larger than in the separated containers known in Green Wall solutions. The root system can grow horizontally and also vertically thanks to vertical silos. Structures using this system will be massive, which will allow to obtain the effect of climate comfort with a measurable impact on the surrounding climate, so it can be an effective tool to reduce so-called heat islands in cities. It is possible to differentiate the substrate on each layer, adapting it to plant requirements or regulating the moisture of each layer separately or of several layers joined by vertical silos, so it will be possible to differentiate plant species: succulents, perennials, grasses, ferns, shrubs, selected geophytes, etc. Another advantage is the possibility of using plants of different sizes, thus the plant mass of the layers-ecosystems of structures as a whole will be greater than in the variants of well-known Green Wall solutions. Presented panel modular system allows us - in a small area of the base which is occupied by vertical, sloping, arched-barrel, spherical, cylindrical and sloping cylindrical structure - to obtain a living cubic content of vegetating plants multiplied by a dozen or even several dozen times, which is valuable in areas of dense building development, where there are spatial restrictions and where there are few or no biologically active areas.

The principle of bipolar planting of plants on panels is used in relation to the intensity of illuminating the surface of panels within the structure.

Differentiation of the edges of individual layers of the layered wall structure, which is created as a result of assembling the panels/modules, is aimed at optimizing the illumination of the surface of all the panels that make up a given module by means of both direct and reflected sunrays. - obtaining rainwater for plant irrigation (apart from the employed irrigation system). - the possibility of the growth of some plants over a fixed distance between the top of the substrate layer and the bottom of the panel which is placed above, thanks to the fact that the panels do not overlap with each other in the vertical plane, which enables the use of plants growing over this fixed distance. - scattering of reflected sound waves.

With the load-bearing structure used in the vertical, sloping, arched-barrel, spherical, cylindrical and sloping cylindrical structure of the layered wall, it is also possible to employ only panels without plant matter within the whole structure due to the two main goals of the solution. Presented panel-modular system combining two variables: horizontal and vertical is a fusion of their functionality. The solution combines in one: a flat or spatial load-bearing plane - vertical, sloping, arched-barrel, spherical, cylindrical and sloping cylindrical and the maximum of horizontal area for plant vegetation, in the form of layers made up of joined sideways panels connected by vertical silos filled with the substrate, with an appropriately optimized front shape, in terms of illumination, rainwater harvesting and plant vegetation, using a suitable substrate in combination with water and mineral plant supply, which gives a high degree of independence from the environment in which the system is installed. A fair-sized ecosystem, which is a single layer or a specifically combined set of layers, improves the proper vegetation of plants, making them more resistant to the minima of a temperate climate in winter and also to extremes of a hot and dry climate in summer.

The system according to embodiments of the invention is shown in the drawings which presents

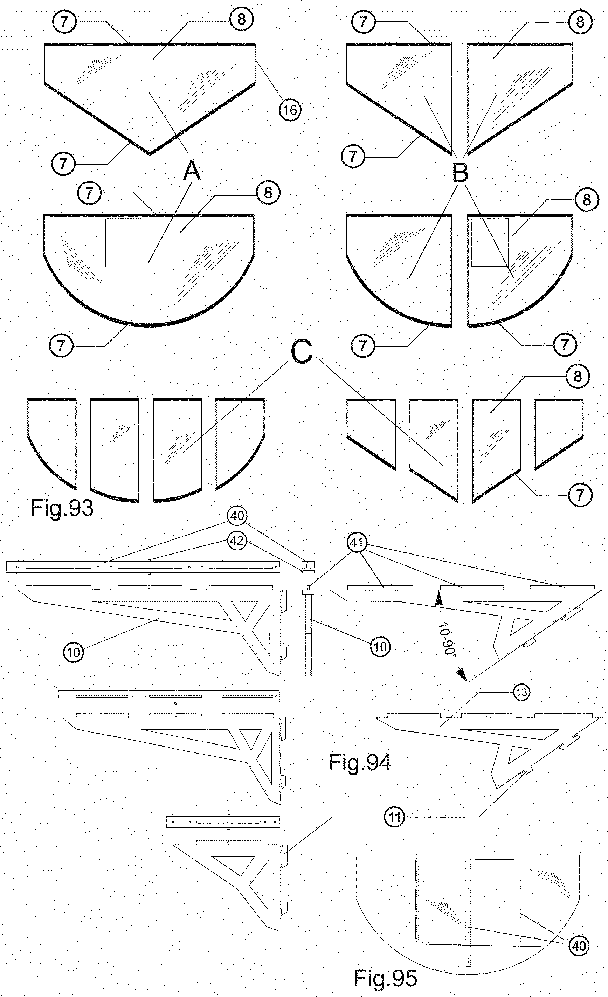

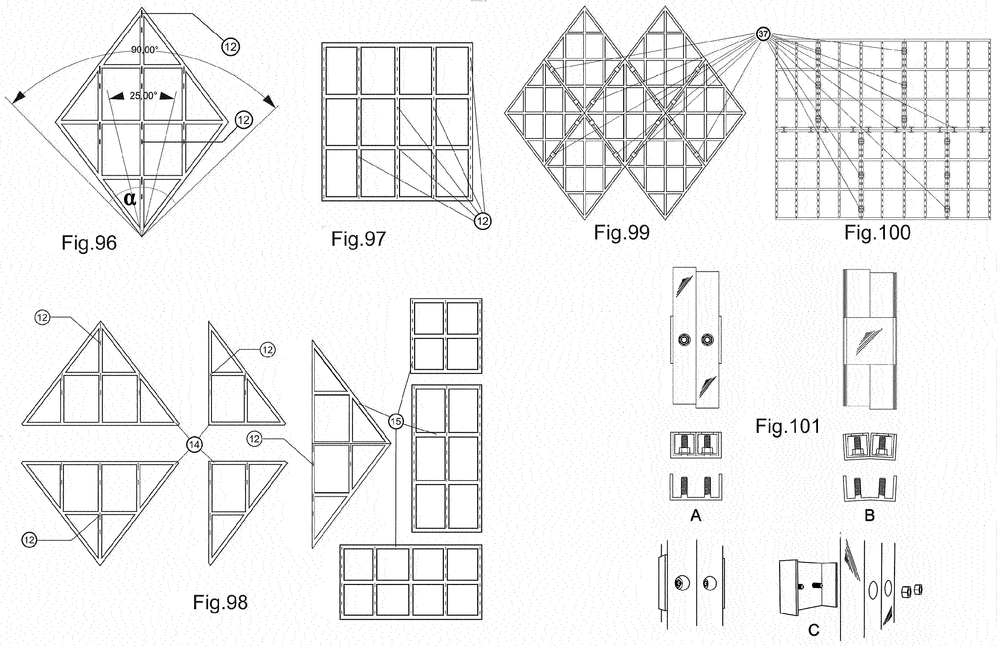

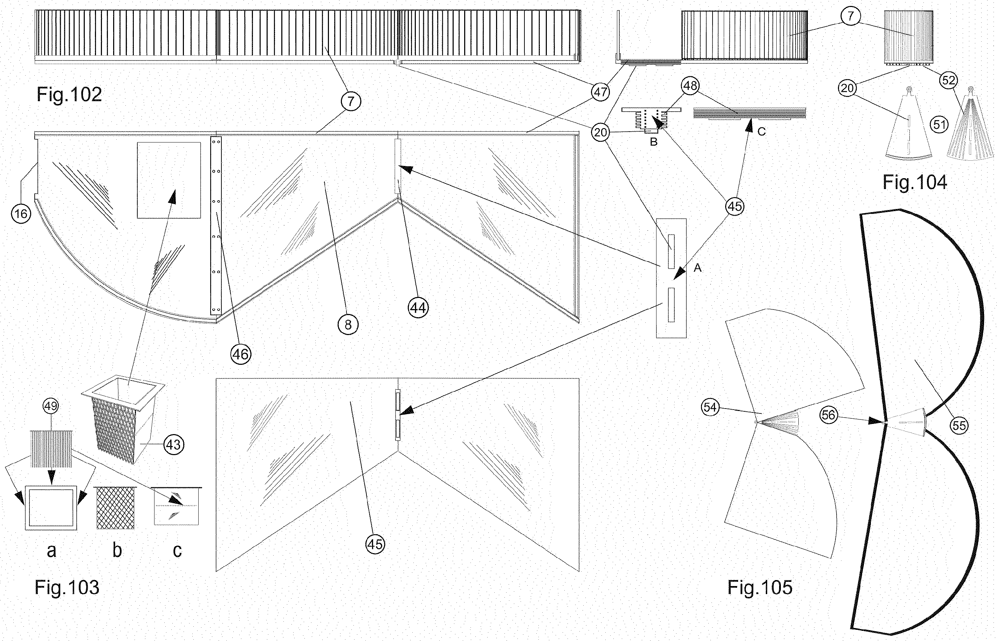

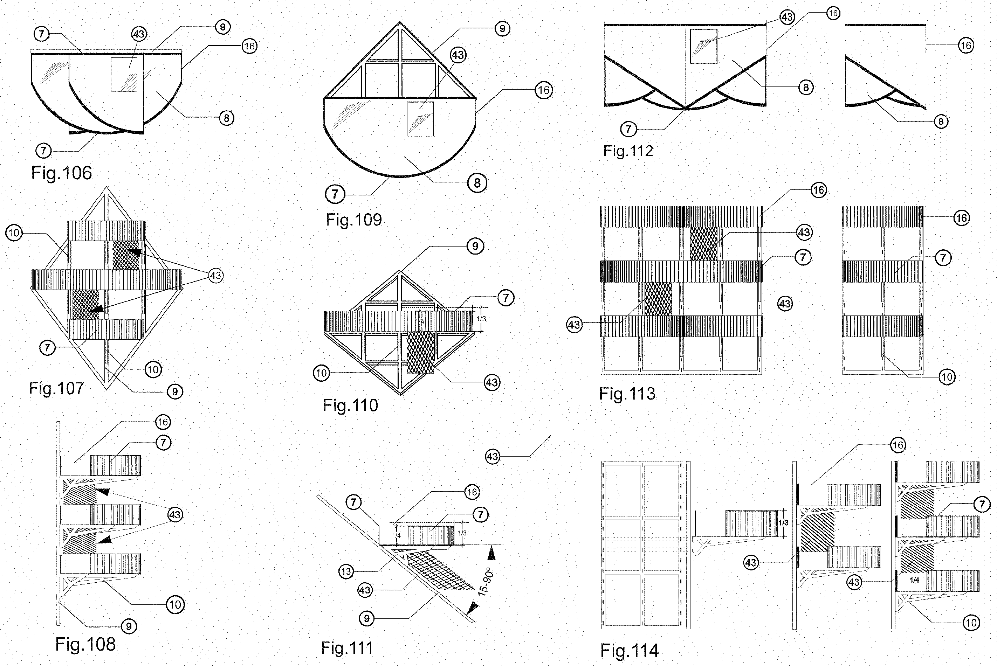

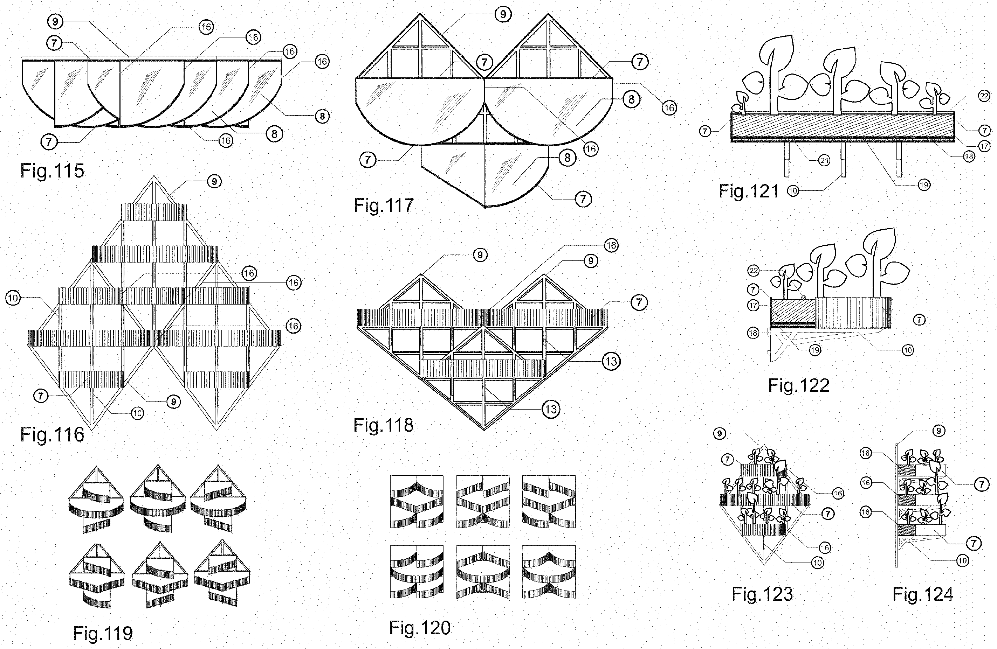

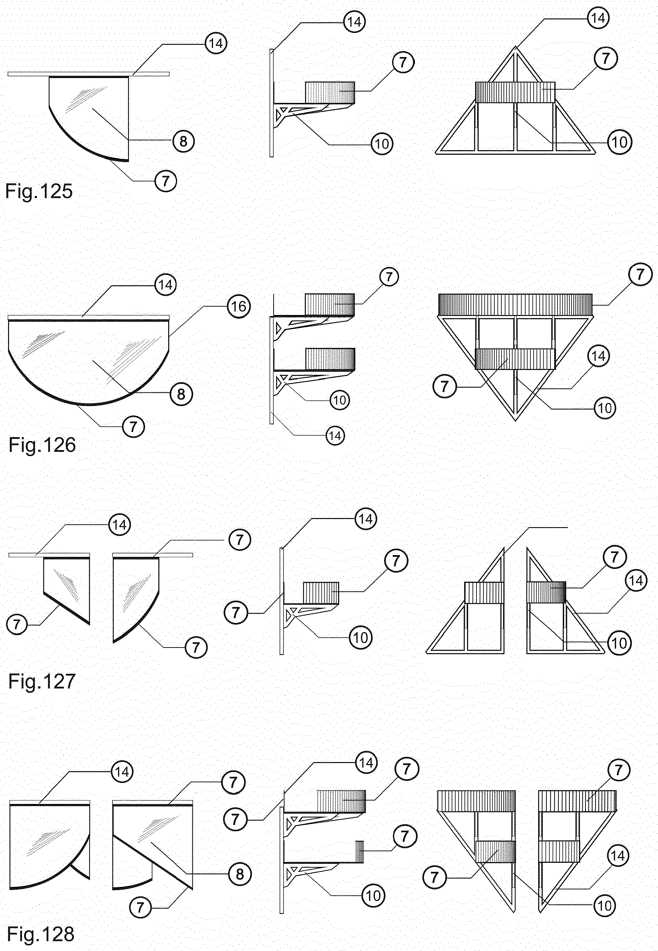

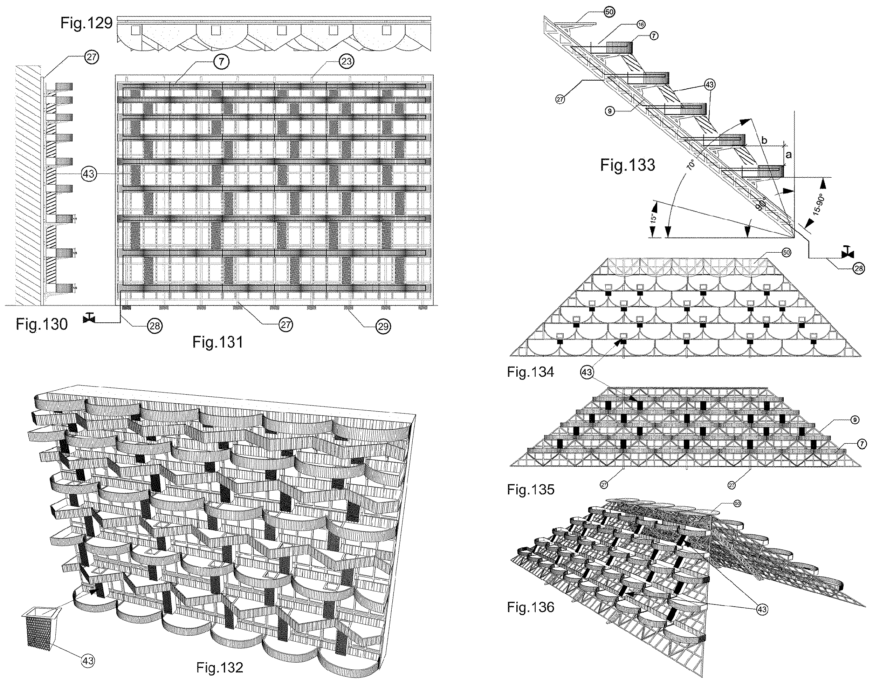

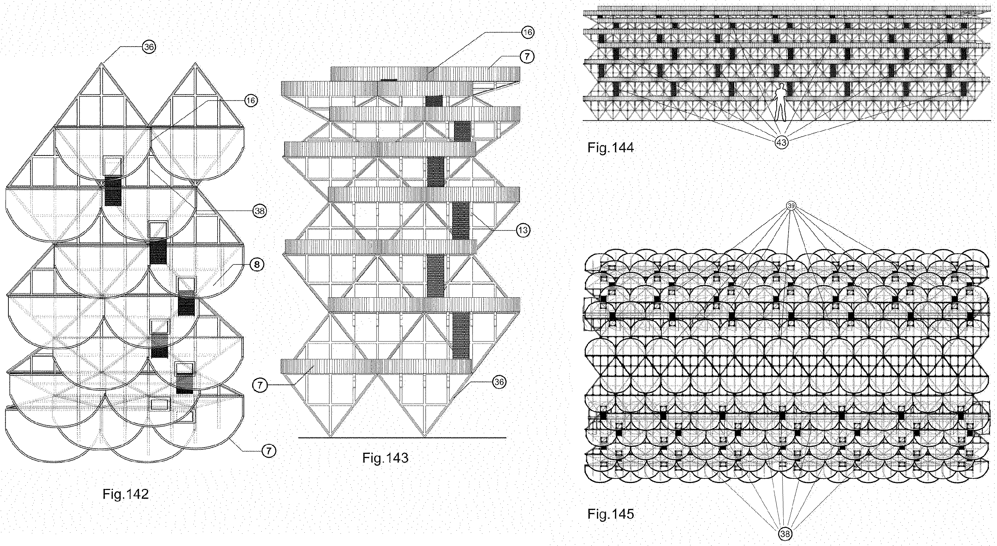

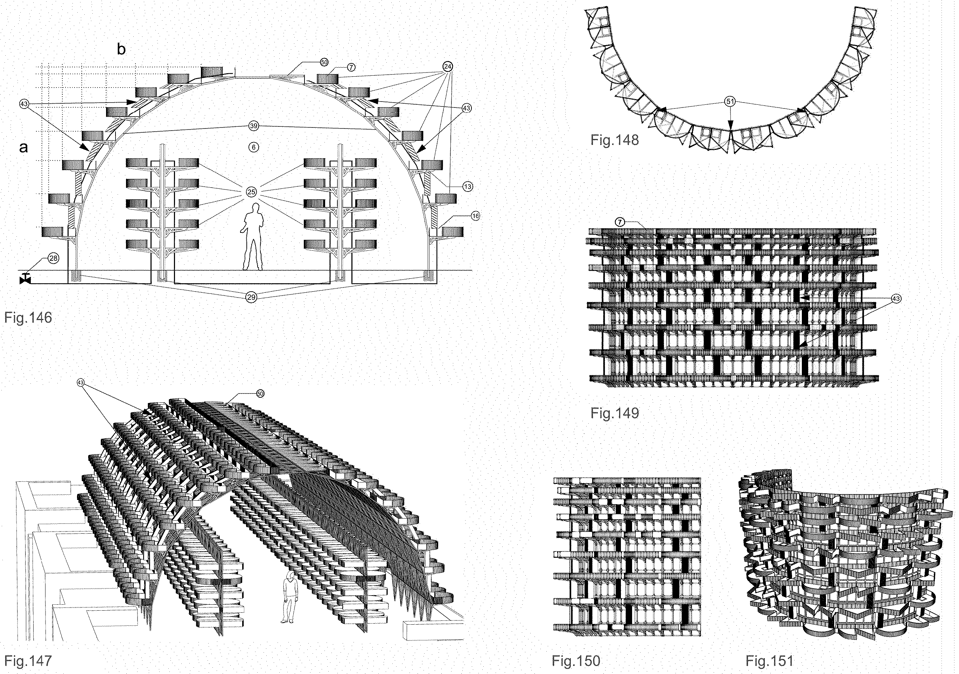

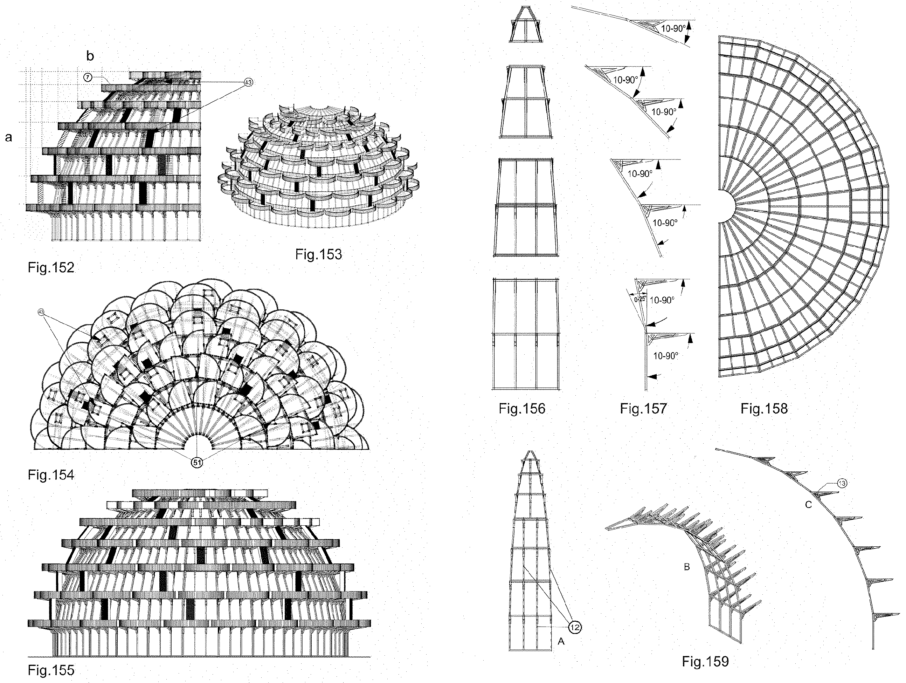

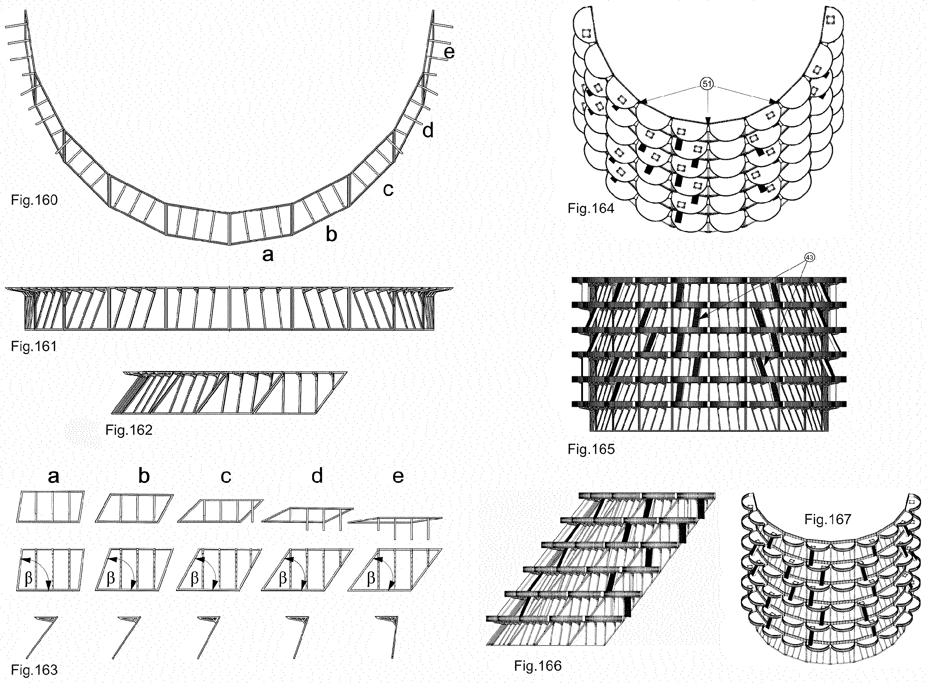

Fig. 93. Panels mounted on a rhombus and a square frame; Fig.94.Types of cantilevers; Fig.95. Whole panel with a hole for a silo; Fig.96. Rhombus-shaped frame; Fig.97. Square frame; Fig.98. Types of frames of additional modules; Fig.99. Joining points of rhombus-shaped frames. (Rear view). 37. Clamps; Fig.100. Joining points of square frames, 37. Couplers (front view); Fig.101. couplers for joining frames, A) front and rear view, B) side view, C) perspective, assembly view; Fig.102. Joining elements of panels; 7. Panel band, 8. Panel plane, 16 Panel joining side, 20. Drain-pipes, 43. Silo, 44. Hole for panel joining strip, 45. Panel expansion joint, 46. Panel joining strip, 47. Guide bar for panel band, 48. Expansion 35 joint elements. Fig.103 Silo; Fig.104. Filling strip between panels in the spherical, cylindrical and sloping cylindrical structure; Fig.105. Arrangement of the panels on the top layer of the spherical structure (view from below); Fig.106, 107,108. Module on the rhombus frame; Fig.106 (top view), Fig.107 (front view); Fig.108, (side view), Fig.109, 110, 111, Diagonally mounted module; Fig.109 (top view), Fig.110 (front view); Fig.111 (side view); Fig.112, 113,114, Module on the rectangular frame, 7. Panel bands, 8.Panel plane, 16.Panel joining side; Fig.112 (Top view); Fig.113. (Front view); Fig.114. (Side view); Fig.115, 116, Assembly of modules on the rhombus frame in the vertical structure. 7. Panel bands, 9. Panel frame, 10. Cantilevers, 16. Panel joining side where a given panel is connected to the adjacent panel Fig.115 (top view). Fig.116 (front view); Fig.117, 118 Assembly of modules on the rhombus frame in the sloping structure using whole and half panels, 7. Panel sides, 8. Panel plane, 9. Panel frame, 16. Panel joining side, Fig.117 (top view). Fig.118 (front view); Fig.119. Sample of different panel combinations within rhombus frame; Fig.120. Sample combinations of 6 panels in the basic module configuration, on the square-shaped frame; (perspective); Fig.121. Components of a single module panel (front view); Fig.122. Components of a panel (side view); Fig.123, 124. Module of rhombus frame with plants; (front view); Fig.124. (Side view); Fig.125. Complementary module with basic panels, type a (top, side, front view); Fig.126. Complementary module with basic panels, type B, (top, side, front view); Fig.127.Complementary module with basic panels, type C; (top, side, front view); Fig.128. Complementary module with basic panels, type D (top, side, front view); Fig.129, 130,131,132. Open structure arrangement on the plane of a building elevation with variable distances among layers, 8. Panel plane, 27. Load-bearing frame of the structure with a foundation, 28. Irrigation system, 43. Silo; Fig.129 (top view); Fig.130. (Side view); Fig.131 (front view), Fig.132. (Perspective view); Fig.133, 134,135,136. Flat sloping structure; a) fixed distance between the surface of the panel plane; b) fixed distance between panel fronts; 7. Bands, 9.Module frame, 13. Cantilever, 16. Panel joining place, 27. Support of a structure made of modules, 28. Irrigation system, 43. Silos, 50. Transparent, photovoltaic panels, Fig.133. (side view). Fig.134. (top view), Fig.135. (front view), Fig.136. (Perspective); Fig.137, 138,139. View of a panel on the bent frame used in the arched structure; Fig.137, (top view) Fig.138. (Side view); Fig.139. (Front view), Fig.140, 141. Half modules on the bent frame, used in the arched structure; Fig.140. (Top view), Fig.141. (Front view), Fig.142, 143,144,145. Arched structure with the use of a frame with a fixed deflection angle, (Fig.142, 143, fragment of a structure), 7. Bands, 8. Panel, 13. Cantilever, 16. Panel joining side, 36. Bent frame of the module, 38. Clearances for illuminating the interior, 43. Silo. Fig.142 (top view), Fig.143. (Front view); Fig.144. Full arched structure; (side view), Fig.145. (Top view), Fig.146, 147. Arched structure with the use of module frames with a fixed deflection angle with elements of vertical structures inside; a) distances between panel surfaces, b) distances between panel fronts; 6. Microclimate inside the structure, 7. Bands, 8.Panel, 13. Cantilever, 16. Panel joining side, 24. Panels with photophilic plants, 25. Panels with shade-loving plants, 28. Irrigation system, 29. Footings of constructional frame, 39. Arched construction (cross-section view), 43. Silo. Fig.148, 149,150,151. 43. Silo, 51.Filling strip, Fig.148, (top view), Fig.149. (Front view), Fig.150, (side view), Fig.151. (Perspective); Fig.152, 153,154,155. Spherical structure, a) distances between panel surfaces, b) distances between panel fronts, 43. Silo, 51. Filling strip, Fig.153. (Perspective); Fig.154, (top view); Fig.155. (Front view); Fig.156. Trapezium-shaped frames used in the spherical structure (front view); Fig.157. Trapezium-shaped frames (side view); Fig.158. Spherical load-bearing frame (top view of the construction), Fig.159. Fragment of the arch out of trapezium frames forming the spherical load-bearing frame, A) (front view); Fig.160. Sloping cylindrical structure, load-bearing element (top view); Fig.161. Sloping cylindrical structure, load-bearing element (front view); Fig.162. Sloping cylindrical, load-bearing element (side view); Fig.163. Sloping cylindrical structure, load-bearing frames of the structure, a, b, c, d, e: (top view, side view, cross-section view); Fig.164, 165,166,167. Sloping cylindrical structure, 43.Silo, 51.Filling strip, Fig.164 (top view); Fig.165. (Front view); Fig.166. (Side view), Fig.167. (Perspective);

### Examples of an execution

### Example I

The panel-modular system of the layered wall for shaping spatial structures according to an embodiment of the invention contains modules, each of which is a combination of a layered, horizontal arrangement of panels, placed no more than three on a frame made of a closed profile with a rectangular cross-section, together with placed on them vegetating plants on the substrate layer. The frames of the modules are joined together in such a way that they form the flat vertical, flat sloping, arched-barrel, spherical, cylindrical and sloping cylindrical *load-bearing frame* together with applied vertical silos filled with the substrate, joining individual panels and horizontal layers, creating layered "green" wall structures with a horizontal arrangement of layers *in six variants* as *self-supporting structures.*

The panels are selected in such a way that the system elements consist of 2 whole panels, 4 half panels. In addition, the system consists of cooperating with panels, panel joining strips, panel docking strips, cantilevers with a fixed deflection angle or variable deflection angle within the structure in the range of 10 to 90 degrees, the lock of panel cantilevers, two types of module frames, flat and bent in the middle part in the range of 0 to 25 degrees in the shape of a rhombus and a rectangle and frames resulting from the division, frame couplers, silos with an inclination angle from 30 to 90 degrees, as well as panel bands.

The panels which are not enclosed by bands are devoid of plants, with a full or transparent filling, and they are therefore mounted on the module frame in a closer sequence of distances between the panel planes.

The frames of modules are joined by means of couplers, made of thick, profiled metal sheet, bent into a "u" shape with two welded threaded pins located in the inner part of the clamp. Holes in which threaded pins of the clamp joining both frames enter are placed on the perimeter of the whole frame at regular intervals. On the opposite side of the hole into which the pin enters there is a mounting hole for a socket wrench and a self-locking nut which is bolted onto the pin. The mounting hole is located on the outer side of the structure where cantilevers and panels are mounted on the frames. Flat frames are joined by means of couplers where threaded pins are placed parallel next to each other inside the coupler of channel section shape Fig.101A.

In addition, as a separate arrangement, the system according to an embodiment of the invention comprises the irrigation system for plants; and the substrate for plants and the method of planting them are selected within the structure according to a bipolar key.

The flat load-bearing plane on which the panels of the system are mounted according to an embodiment of the invention is formed by the flat frames of rhombus shape or halves and quarters of a rhombus, which are joined sideways diagonally and the frames in the shape of a rectangle and the frames constituting a half of its shape, which are joined sideways by means of couplers, and on which the panels are mounted filled with the substrate with plants, another adjacent layers of these panels are joined by vertical silos. The layers of the system according to the invention are held by cantilevers with a 90 degree supporting angle. The load-bearing plane as a whole is assembled vertically in relation to the ground and forms the vertical structure of the layered wall.

On the vertical trellises of rectangular frames and frames in the shapes resulting from their division by 1/2, 1/4, 1/8 there are mounting holes for cantilevers, at regular intervals from the top to the bottom of the frame, which correspond to the spacing of mounting hooks for cantilevers supporting panels in 4 types of layered wall structures, thus the distances between the created planes of layers of panels can be freely adjusted within these structures.

Within the structures of the front of the panels, in the case of a flat plane, starting from the layer of panels placed closest to the ground up to the top one, the panels are in one plane, while surfaces of the horizontal cross-sections of the panels do not coincide with each other in a top view, but pass each other.

Each panel consists of the base and bands, keeping the moist substrate with plants inside the panel. The height of the bands is normally 1/4 of the panel depth when the panels are mounted on three levels on the module frame and up to 1/3 of the panel depth when using a double or single panel on the module frame. The bottom and bands of the panel are lined with an insulating layer of polystyrene and insulating foil in particular, which are covered with a layer of expanded clay and the substrate with plants. The bands are placed in the guide bar bolted to the edge of the panel, encircling each whole panel around except for parts of both its sides along the panel width, and "truncated" on the sides at a 90 degrees angle to the plane of the module frame, by which they butt the adjacent panels on both sides at more than 1/3 of the depth of each panel. In this way, they form a horizontal layer, stretching along the layered wall structure. The half panels are joined sideways on one side at 1/3 of the panel depth and on the other side for the whole panel depth. Each panel, joining the adjacent panels, creates a long level, stretching along the whole layered wall structure. The layer of the substrate can be thick in the range of 15-35 cm.

The silos joining the layers are fully filled on three sides, while their front is covered with a fine weave mesh. The silos have an inclination angle of 30 to 90 degrees as seen in a side view of the structure, and panels with a hole for the silo together with the silo located there are placed every third whole panel without a hole, within a given layer made of panels. The silos have holes for combs made of rods which are put from three sides at fixed distances at the height of the silo.

The irrigation system is installed in all the module panels forming together layers and the panel-modular system. On each layer there is a separate controller that doses the amount of water due to the requirements of the plants placed there. The irrigation system is connected to a continuous water supply or to a replenished tank with a pump which guarantees a continuous water supply to the irrigation system. The water supply varies depending on the season of the year, needs and type of plants, e.g. shade-loving or photophilic plants, spatial and climatic location of the structure. Rainwater is obtained by means of an appropriate scale of panel planes and configuration of layers, and through vertical silos it is distributed within the joint system of the layer wall, which, in the case of regular rainfall, may result in periodic shutdown of the irrigation system.

*On the layered wall created with the help of the system according to the invention,* plants are placed according to the principle of bipolarity. On the outer and better illuminated parts of the panel, photophilic plants are placed, and on the inner and lower layers of the structure, shade-loving plants.

### Example II

The panel-modular system of the layered wall for shaping spatial structures according to an embodiment of the invention contains modules, each of which is a combination of a layered, horizontal arrangement of panels, placed no more than three on a frame made of a closed profile with a rectangular cross-section, together with placed on them vegetating plants on the substrate layer. The frames of the modules are joined together in such a way that they form the flat *load-bearing frame* together with applied vertical silos filled with the substrate, joining individual panels and horizontal layers, creating layered "green" wall structures with a horizontal arrangement of layers *in six variants* as *self-supporting structures.*

The panels are selected in such a way that the system elements consist of 2 whole panels, 4 half panels. In addition, the system consists of cooperating with panels, panel joining strips, panel docking strips, cantilevers with a fixed deflection angle or variable deflection angle within the structure in the range of 10 to 90 degrees, the lock of panel cantilevers, two types of module frames, flat and bent in the middle part in the range of 0 to 25 degrees in the shape of a rhombus and rectangle and frames resulting from the division, frame couplers, silos with an inclination angle from 30 to 90 degrees, as well as preferably panel bands.

The panels which are not enclosed by bands appear exclusively as devoid of plants, with a full or transparent filling, and they are therefore mounted on the module frame in a closer sequence of distances between the panel planes.

The frames of modules are joined by means of couplers, made in particular of thick, profiled metal sheet, bent into a "u" shape with two welded threaded pins located in the inner part of the clamp. Holes in which threaded pins of the clamp joining both frames enter are placed on the perimeter of the whole frame at regular intervals. On the opposite side of the hole into which the pin enters there is a mounting hole for a socket wrench and a self-locking nut which is bolted onto the pin. The mounting hole is located on the outer side of the structure where cantilevers and panels are mounted on the frames. Flat frames are joined by means of couplers where threaded pins are placed parallel next to each other inside the coupler of channel section shape Fig.101A.

The flat load-bearing plane on which the panels of the system are mounted according to an embodiment of the invention is formed of the flat frames of rhombus shape or halves and quarters of a rhombus, which are joined sideways diagonally and the frames in the shape of a rectangle and the frames constituting a half of its shape, which are joined sideways by means of couplers, and on which the panels are mounted filled with the substrate with plants, another adjacent layers of these panels are joined by vertical silos. In this case a combination into the layers is done by means of cantilevers with a supporting angle in the range of 15 to 90 degrees, then the load-bearing plane as a whole is assembled diagonally in relation to the ground and forms the sloping structure of the layered wall.

On the elements of vertical trellises of rectangular frames and frames in the shapes resulting from their division by 1/2, 1/4, 1/8 there are mounting holes for cantilevers, at regular intervals from the top to the bottom of the frame, which correspond to the spacing of mounting hooks for cantilevers supporting panels in 6 types of layered wall structures, thus the distances between the created planes of layers of panels can be freely adjusted within these structures. Within the structures of the front of the panels, starting from the layer of panels placed closest to the ground up to the top one, the panels are in one plane, while surfaces of the horizontal cross-sections of the panels do not coincide with each other in a top view, but pass each other. A characteristic feature of the sloping flat layered wall structure is a much greater exposure of the whole panel surfaces to light and rainwater because the panel fronts, depending on the inclination of the plane, are distant from each other and do not remain in one plane as in the vertical flat layered wall structure.

Each panel consists of the base and bands, keeping the moist substrate with plants inside the panel. The height of the bands is normally 1/4 of the panel depth when the panels are mounted on three levels on the module frame and up to 1/3 of the panel depth when using a double or single panel on the module frame. The bottom and bands of the panel are lined with an insulating layer of polystyrene and insulating foil in particular, which are covered with a layer of expanded clay and the substrate with plants. The bands are placed in the guide bar bolted to the edge of the panel, encircling each whole panel around except for parts of both its sides along the panel width, and "truncated" on the sides at a 90 degrees angle to the plane of the module frame, by which they butt the adjacent panels on both sides at more than 1/3 of the depth of each panel. In this way, they form a horizontal layer, stretching along the layered wall structure. The half panels are joined sideways on one side at 1/3 of the panel depth and on the other side for the whole panel depth. Each panel, joining the adjacent panels, creates a long level, stretching along the whole layered wall structure. The layer of the substrate is thick in the range of 15 to 35 cm.

The silos joining the layers are fully filled on three sides, while their front is covered with a fine weave mesh. The silos have an inclination angle of 30 to 90 degrees as seen in a side view of the structure, and panels with a hole for the silo together with the silo located there are placed every third whole panel without a hole, within a given layer made of panels. The silos have holes for combs made of rods which are put from three sides at fixed distances at the height of the silo.

The irrigation system is installed in all the module panels forming together layers and the panel-modular system. On each layer there is a separate controller that doses the amount of water due to the requirements of the plants placed there. The irrigation system is connected to a continuous water supply or to a replenished tank with a pump which guarantees a continuous water supply to the irrigation system. The water supply varies depending on the season of the year, needs and type of plants, e.g. shade-loving or photophilic plants, spatial and climatic location of the structure. Rainwater is obtained by means of an appropriate scale of panel planes and configuration of layers, and through vertical silos it is distributed within the joint system of the layer wall, which, in the case of regular rainfall, may result in periodic shutdown of the irrigation system.

*On the layered wall created with the help of the system according to the invention,* plants are placed according to the principle of bipolarity. On the outer and better illuminated parts of the panel, photophilic plants are placed, and on the inner and lower layers of the structure, shade-loving plants.

### Example III

The panel-modular system of the layered wall for shaping spatial structures according to an embodiment of the invention contains modules, each of which is a combination of a layered, horizontal arrangement of panels, placed no more than three on a frame made of a closed profile with a rectangular cross-section, together with placed on them vegetating plants on the substrate layer. The frames of the modules are joined together in such a way that they form the arched-barrel together with applied vertical silos filled with the substrate, joining individual panels and horizontal layers, creating layered "green" wall structures with a horizontal arrangement of layers *in six variants* as *self-supporting structures.*

The panels are selected in such a way that the system elements consist of 2 whole panels, 4 half panels. In addition, the system consists of cooperating with panels, panel joining strips, panel docking strips, cantilevers with a fixed deflection angle or variable deflection angle within the structure in the range of 10 to 90 degrees, the lock of panel cantilevers, two types of module frames, flat and bent in the middle part in the range of 0 to 25 degrees in the shape of a rhombus and rectangle and frames resulting from the division, frame couplers, silos with an inclination angle from 30 to 90 degrees, as well as panel bands.

The panels which are not enclosed by bands appear exclusively as devoid of plants, with a full or transparent filling, and they are therefore mounted on the module frame in a closer sequence of distances between the panel planes.

The frames of modules are joined by means of couplers, made in particular of thick, profiled metal sheet, bent into a "u" shape with two welded threaded pins located in the inner part of the clamp. Holes in which threaded pins of the clamp joining both frames enter are placed on the perimeter of the whole frame at regular intervals. On the opposite side of the hole into which the pin enters there is a mounting hole for a socket wrench and a self-locking nut which is bolted onto the pin. The mounting hole is located on the outer side of the structure where cantilevers and panels are mounted on the frames. Flat frames are joined by means of couplers where threaded pins are placed parallel next to each other inside the coupler of channel section shape Fig.101A.

The arched-barrel load-bearing plane on which the panels of the system are mounted according to the invention is formed by the bent module frames of rhombus shape or halves and quarters of a rhombus, which are joined sideways diagonally together with couplers with angles in the range of 25 to 90 degrees and in the shape of a rectangle and a square, bent symmetrically in the middle part at an angle in the range of 0 to 25 degrees, they are joined sideways diagonally or with a shift by means of couplers and form together the arched-barrel load-bearing frame of the layered wall, on which the panels are mounted filled with the substrate with plants, joined by vertical silos, and/or the panels with a transparent or 100% opaque filling, which are combined together in layers directed perpendicularly to the arch of the structure and horizontally to the ground supported by cantilevers with a supporting angle in the range of 10 to 90 degrees, which form the arched-barrel structure of the layered wall.

On the elements of the vertical trellises of rectangular frames and frames in the shapes resulting from their division by 1/2, 1/4, 1/8 there are mounting holes for cantilevers, at regular intervals from the top to the bottom of the frame, which correspond to the spacing of mounting hooks for cantilevers supporting panels in 6 types of layered wall structures, thus the distances between the created planes of layers of panels can be freely adjusted within these structures.

A characteristic feature of the arched-barrel flat layered wall structure is a much greater exposure of the whole panel surfaces to light and rainwater because the panel fronts, depending on the plane of the arch, are distancing from each other and do not remain in one plane as in the flat vertical, cylindrical or flat sloping layered wall.

Each panel consists of the base and bands, keeping the moist substrate with plants inside the panel. The height of the bands is normally 1/4 of the panel depth when the panels are mounted on three levels on the module frame and up to 1/3 of the panel depth when using a double or single panel on the module frame. The bottom and bands of the panel are lined with an insulating layer of polystyrene and insulating foil in particular, which are covered with a layer of expanded clay and the substrate with plants. The bands are placed in the guide bar bolted to the edge of the panel, encircling each whole panel around except for parts of both its sides along the panel width, and "truncated" on the sides at a 90 degrees angle to the plane of the module frame, by which they butt the adjacent panels on both sides at more than 1/3 of the depth of each panel. In this way, they form a horizontal layer, stretching along the layered wall structure. The half panels are joined sideways on one side at 1/3 of the panel depth and on the other side for the whole panel depth. Each panel, joining the adjacent panels, creates a long level, stretching along the whole layered wall structure.

The layer of the substrate is thick in the range of 15 to 35 cm.

The silos joining the layers are fully filled on three sides, while their front is covered with a fine weave mesh. The silos have an inclination angle of 30 to 90 degrees as seen in a side view of the structure, and panels with a hole for the silo together with the silo located there are placed every third whole panel without a hole, within a given layer made of panels. The silos have holes for combs made of rods which are put from three sides at fixed distances at the height of the silo.

The irrigation system is installed in all the module panels forming together layers and the panel-modular system. On each layer there is a separate controller that doses the amount of water due to the requirements of the plants placed there. The irrigation system is connected to a continuous water supply or to a replenished tank with a pump which guarantees a continuous water supply to the irrigation system. The water supply varies depending on the season of the year, needs and type of plants, e.g. shade-loving or photophilic plants, spatial and climatic location of the structure. Rainwater is obtained by means of an appropriate scale of panel planes and configuration of layers, and through vertical silos it is distributed within the joint system of the layer wall, which, in the case of regular rainfall, may result in periodic shutdown of the irrigation system.

*On the layered wall created with the help of the system according to the invention,* plants are placed according to the principle of bipolarity. On the outer and better illuminated parts of the panel, photophilic plants are placed, and on the inner and lower layers of the structure, shade-loving plants.

### Example IV

The panel-modular system of the layered wall for shaping spatial structures according to an embodiment of the invention contains modules, each of which is a combination of a layered, horizontal arrangement of panels, placed no more than three on a frame made of a closed profile with a rectangular cross-section, together with placed on them vegetating plants on the substrate layer. The frames of the modules are joined together in such a way that they form the spherical *load-bearing frame* together with applied vertical silos filled with the substrate, joining individual panels and horizontal layers, creating layered "green" wall structures with a horizontal arrangement of layers *in six variants* as *self-supporting structures.*

The panels are selected in such a way that the system elements consist of 2 whole panels, 4 half panels. In addition, the system consists of cooperating with panels, panel joining strips, panel docking strips, cantilevers with a fixed deflection angle or variable deflection angle within the structure in the range of 10 to 90 degrees, the lock of panel cantilevers, two types of module frames, flat and bent in the middle part in the range of 0 to 25 degrees in the shape of a rhombus and rectangle and frames resulting from the division, frame couplers, silos with an inclination angle from 30 to 90 degrees, as well as panel bands.

The panels which are not enclosed by bands appear exclusively as devoid of plants, with a full or transparent filling, and they are therefore mounted on the module frame in a closer sequence of distances between the panel planes.

The frames of modules are joined by means of couplers, made in particular of thick, profiled metal sheet, bent into a "u" shape with two welded threaded pins located in the inner part of the clamp. Holes in which threaded pins of the clamp joining both frames enter are placed on the perimeter of the whole frame at regular intervals. On the opposite side of the hole into which the pin enters there is a mounting hole for a socket wrench and a self-locking nut which is bolted onto the pin. The mounting hole is located on the outer side of the structure where cantilevers and panels are mounted on the frames. The frames forming cylindrical (vertical and sloping) structures and spherical structures are joined by means of couplers bent in the middle at an angle in the range of 0 to 25 degrees according to the applied deflection of the frames of trapeziums or rhombuses Fig.101B.

The spherical load-bearing plane on which the panels of the system are mounted according to the invention is formed by the module frames in the shape of a trapezium or a rhombus which are bent symmetrically in the middle part at an angle in the range of 0 to 25 and are joined sideways by means of couplers, creating together self-supporting spatial spherical construction of the layered wall, on which the panels are mounted filled with the substrate with plants, joined by vertical silos, and/or the panels with a transparent or 100% opaque filling, which are combined together in layers directed perpendicularly to the arch of the structure and horizontally to the ground supported by cantilevers with a supporting angle in the range of 10 to 90 degrees which form the spherical structure of the layered wall.

On the elements of the vertical trellises of rectangular frames and frames in the shapes resulting from their division by 1/2, 1/4, 1/8 there are mounting holes for cantilevers, at regular intervals from the top to the bottom of the frame, which correspond to the spacing of mounting hooks for cantilevers supporting panels in 4 types of layered wall structures, thus the distances between the created planes of layers of panels can be freely adjusted within these structures.

Within the structures of the front of the panels, starting from the layer of panels placed closest to the ground up to the top one, the panels are in one plane, while surfaces of the horizontal cross-sections of the panels do not coincide with each other in a top view, but pass each other.

Each panel consists of the base and bands, keeping the moist substrate with plants inside the panel. The height of the bands is normally 1/4 of the panel depth when the panels are mounted on three levels on the module frame and up to 1/3 of the panel depth when using a double or single panel on the module frame. The bottom and bands of the panel are lined with an insulating layer of polystyrene and insulating foil in particular, which are covered with a layer of expanded clay and the substrate with plants. The bands are placed in the guide bar bolted to the edge of the panel, encircling each whole panel around except for parts of both its sides along the panel width, and "truncated" on the sides at a 90 degrees angle to the plane of the module frame, by which they butt the adjacent panels on both sides at more than 1/3 of the depth of each panel. In this way, they form a horizontal layer, stretching along the layered wall structure. The half panels are joined sideways on one side at 1/3 of the panel depth and on the other side for the whole panel depth. Each panel, joining the adjacent panels, creates a long level, stretching along the whole layered wall structure. The layer of the substrate is thick in the range of 15 to 35 cm.

The silos joining the layers are fully filled on three sides, while their front is covered with a fine weave mesh. The silos have an inclination angle of 30 to 90 degrees as seen in a side view of the structure, and panels with a hole for the silo together with the silo located there are placed every third whole panel without a hole, within a given layer made of panels. The silos have holes for combs made of rods which are put from three sides at fixed distances at the height of the silo.

The irrigation system is installed in all the module panels forming together layers and the panel-modular system. On each layer there is a separate controller that doses the amount of water due to the requirements of the plants placed there. The irrigation system is connected to a continuous water supply or to a replenished tank with a pump which guarantees a continuous water supply to the irrigation system. The water supply varies depending on the season of the year, needs and type of plants, e.g. shade-loving or photophilic plants, spatial and climatic location of the structure. Rainwater is obtained by means of an appropriate scale of panel planes and configuration of layers, and through vertical silos it is distributed within the joint system of the layer wall, which, in the case of regular rainfall, may result in periodic shutdown of the irrigation system.

*On the layered wall created with the help of the system according to the invention,* plants are placed according to the principle of bipolarity. On the outer and better illuminated parts of the panel, photophilic plants are placed, and on the inner and lower layers of the structure, shade-loving plants.

A characteristic feature of the spherical layered wall structure is a much greater exposure of the whole panel surfaces to light and rainwater because the panel fronts, depending on the plane of the arch, are distancing from each other and do not remain in one plane as in the flat vertical, cylindrical or flat sloping layered wall.

### Example V

The panel-modular system of the layered wall for shaping spatial structures according to an embodiment of the invention contains modules, each of which is a combination of a layered, horizontal arrangement of panels, placed no more than three on a frame made of a closed profile with a rectangular cross-section, together with placed on them vegetating plants on the substrate layer. The frames of the modules are joined together in such a way that they form the flat vertical, flat sloping, arched-barrel, spherical, cylindrical and sloping cylindrical *load-bearing frame* together with applied vertical silos filled with the substrate, joining individual panels and horizontal layers, creating layered "green" wall structures with a horizontal arrangement of layers *in six variants* as *self-supporting structures.*

The panels are selected in such a way that the system elements consist of 2 whole panels, 4 half panels. In addition, the system consists of cooperating with panels, panel joining strips, panel docking strips, cantilevers with a fixed deflection angle or variable deflection angle within the structure in the range of 10 to 90 degrees, the lock of panel cantilevers, two types of module frames, flat and bent in the middle part in the range of 0 to 25 degrees in the shape of a rhombus and rectangle and frames resulting from the division, frame couplers, silos with an inclination angle from 30 to 90 degrees, as well as preferably panel bands.

The panels which are not enclosed by bands appear exclusively as devoid of plants, with a full or transparent filling, and they are therefore mounted on the module frame in a closer sequence of distances between the panel planes. In addition, as a separate arrangement, the system according to the invention comprises the irrigation system for plants, and the substrate for plants and the method of planting them are selected within the structure according to a bipolar key.

The frames of modules are joined by means of couplers, made in particular of thick, profiled metal sheet, bent into a "u" shape with two welded threaded pins located in the inner part of the clamp. Holes in which threaded pins of the clamp joining both frames enter are placed on the perimeter of the whole frame at regular intervals. On the opposite side of the hole into which the pin enters there is a mounting hole for a socket wrench and a self-locking nut which is bolted onto the pin. The mounting hole is located on the outer side of the structure where cantilevers and panels are mounted on the frames. The frames forming cylindrical (vertical and sloping) structures are joined by means of couplers bent in the middle at an angle in the range of 0 to 25 degrees according to the applied deflection of the frames of trapeziums or rhombuses Fig.35B.

The cylindrical load-bearing plane on which the panels of the system are mounted according to the invention is formed by the flat or bent vertically module frames in the shape of a rhombus or halves and quarters of a rhombus, which are joined sideways diagonally or in the shape of a rectangle and the frames constituting a half of its shape, which are joined sideways by means of couplers, and on which the panels are mounted filled with the substrate with plants, joined by vertical silos, and/or the panels with a transparent or 100% opaque filling, which are combined together in layers by means of cantilevers with a supporting angle of 90 degrees, which as a whole are mounted vertically to the ground and form the cylindrical structure of the layered wall.

On the elements of the vertical trellises of rectangular frames and frames in the shapes resulting from their division by 1/2, 1/4, 1/8 there are mounting holes for cantilevers, at regular intervals from the top to the bottom of the frame, which correspond to the spacing of mounting hooks for cantilevers supporting panels in 6 types of layered wall structures, thus the distances between the created planes of layers of panels can be freely adjusted within these structures.

Within the structures of the front of the panels, in the case of a flat plane, starting from the layer of panels placed closest to the ground up to the top one, the panels are in one plane, while surfaces of the horizontal cross-sections of the panels do not coincide with each other in a top view, but pass each other.

Each panel consists of the base and bands, keeping the moist substrate with plants inside the panel. The height of the bands is normally 1/4 of the panel depth when the panels are mounted on three levels on the module frame and up to 1/3 of the panel depth when using a double or single panel on the module frame. The bottom and bands of the panel are lined with an insulating layer of polystyrene and insulating foil in particular, which are covered with a layer of expanded clay and the substrate with plants. The bands are placed in the guide bar bolted to the edge of the panel, encircling each whole panel around except for parts of both its sides along the panel width, and "truncated" on the sides at a 90 degrees angle to the plane of the module frame, by which they butt the adjacent panels on both sides at more than 1/3 of the depth of each panel. In this way, they form a horizontal layer, stretching along the layered wall structure. The half panels are joined sideways on one side at 1/3 of the panel depth and on the other side for the whole panel depth. Each panel, joining the adjacent panels, creates a long level, stretching along the whole layered wall structure. The layer of the substrate is thick in the range of 15 to 35 cm.

The silos joining the layers are fully filled on three sides, while their front is covered with a fine weave mesh. The silos have an inclination angle of 30 to 90 degrees as seen in a side view of the structure, and panels with a hole for the silo together with the silo located there are placed every third whole panel without a hole, within a given layer made of panels. The silos have holes for combs made of rods which are put from three sides at fixed distances at the height of the silo.

The irrigation system is installed in all the module panels forming together layers and the panel-modular system. On each layer there is a separate controller that doses the amount of water due to the requirements of the plants placed there. The irrigation system is connected to a continuous water supply or to a replenished tank with a pump which guarantees a continuous water supply to the irrigation system. The water supply varies depending on the season of the year, needs and type of plants, e.g. shade-loving or photophilic plants, spatial and climatic location of the structure. Rainwater is obtained by means of an appropriate scale of panel planes and configuration of layers, and through vertical silos it is distributed within the joint system of the layer wall, which, in the case of regular rainfall, may result in periodic shutdown of the irrigation system.

*On the layered wall created with the help of the system according to the invention,* plants are placed according to the principle of bipolarity. On the outer and better illuminated parts of the panel, photophilic plants are placed, and on the inner and lower layers of the structure, shade-loving plants.

### Example VI

The panel-modular system of the layered wall for shaping spatial structures according to an embodiment of the invention contains modules, each of which is a combination of a layered, horizontal arrangement of panels, placed no more than three on a frame made of a closed profile with a rectangular cross-section, together with placed on them vegetating plants on the substrate layer. The frames of the modules are joined together in such a way that they form the flat vertical, flat sloping, arched-barrel, spherical, cylindrical and sloping cylindrical *load-bearing frame* together with applied vertical silos filled with the substrate, joining individual panels and horizontal layers, creating layered "green" wall structures with a horizontal arrangement of layers *in six variants* as *self-supporting structures.*

The panels are selected in such a way that the system elements consist of 2 whole panels, 4 half panels. In addition, the system consists of cooperating with panels, panel joining strips, panel docking strips, cantilevers with a fixed deflection angle or variable deflection angle within the structure in the range of 10 to 90 degrees, the lock of panel cantilevers, two types of module frames, flat and bent in the middle part in the range of 0 to 25 degrees in the shape of a rhombus and rectangle and frames resulting from the division, frame couplers, silos with an inclination angle from 30 to 90 degrees, as well as preferably panel bands.

The panels which are not enclosed by bands appear exclusively as devoid of plants, with a full or transparent filling, and they are therefore mounted on the module frame in a closer sequence of distances between the panel planes.

Each panel consists of the base and bands, keeping the moist substrate with plants inside the panel. The height of the bands is normally 1/4 of the panel depth when the panels are mounted on three levels on the module frame and up to 1/3 of the panel depth when using a double or single panel on the module frame. The bottom and bands of the panel are lined with an insulating layer of polystyrene and insulating foil in particular, which are covered with the layer of expanded clay and substrate with plants. The bands, placed in the guide bar screwed to the edge of the panel, encircle each whole panel around, except for parts of its both sides along the panel width, and "truncated" on the sides at an angle of 90 degrees to the plane of the module frame, by which they butt the adjacent panels on both sides at more than 1/3 of the depth of each panel. In this way, they form a horizontal layer, stretching along the layered wall structure. The half panels are joined sideways on one side at 1/3 of the panel depth and on the other side along the entire panel depth. Each panel, by connecting to the adjacent panels, creates a long level, stretching along the entire layered wall structure.

The sloping cylindrical load-bearing plane on which the panels of the system are mounted according to the invention is formed by the flat module frames in the shape of a rectangle and a trapezium which are joined sideways by means of couplers, on which spatial plane are mounted the panels filled with the substrate with plants, joined by vertical silos, and/or with the panels with a transparent or 100% opaque filling, which are combined together in layers by means of cantilevers with a supporting angle in the range of 10 to 90 degrees, which as a whole is mounted diagonally to the ground and form the sloping cylindrical structure of the layered wall.

On the elements of the vertical trellises of rectangular frames and frames in the shapes resulting from their division by 1/2, 1/4, 1/8 there are mounting holes for cantilevers, at regular intervals from the top to the bottom of the frame, which correspond to the spacing of mounting hooks for cantilevers supporting panels in 4 types of layered wall structures, thus the distances between the created planes of layers of panels can be freely adjusted within these structures. A set of frames used in the sloping cylindrical structure has a variable angle Beta for the structure with a given inclination angle with a minimum of 5 frames per quarter of a circle or ellipse which is the base of the cylinder.

The frames of modules are joined by means of couplers, made in particular of thick, profiled metal sheet, bent into a "u" shape with two welded threaded pins located in the inner part of the clamp. Holes in which threaded pins of the clamp joining both frames enter are placed on the perimeter of the whole frame at regular intervals. On the opposite side of the hole into which the pin enters there is a mounting hole for a socket wrench and a self-locking nut which is bolted onto the pin. The mounting hole is located on the outer side of the structure where cantilevers and panels are mounted on the frames. The frames forming spherical or cylindrical (vertical and sloping) structures are joined by means of couplers bent in the middle at an angle in the range of 0 to 25 degrees according to the applied deflection of the frames of trapeziums or rhombuses Fig.101B.

Each panel consists of the base and bands, keeping the moist substrate with plants inside the panel. The height of the bands is normally 1/4 of the panel depth when the panels are mounted on three levels on the module frame and up to 1/3 of the panel depth when using a double or single panel on the module frame. The bottom and bands of the panel are lined with an insulating layer of polystyrene and insulating foil in particular, which are covered with a layer of expanded clay and the substrate with plants. The bands are placed in the guide bar bolted to the edge of the panel, encircling each whole panel around except for parts of both its sides along the panel width, and "truncated" on the sides at a 90 degrees angle to the plane of the module frame, by which they butt the adjacent panels on both sides at more than 1/3 of the depth of each panel. In this way, they form a horizontal layer, stretching along the layered wall structure. The half panels are joined sideways on one side at 1/3 of the panel depth and on the other side for the whole panel depth. Each panel, joining the adjacent panels, creates a long level, stretching along the whole layered wall structure.

Within the structures of the front of the panels, starting from the layer of panels placed closest to the ground up to the top one, the panels are in one plane, while surfaces of the horizontal cross-sections of the panels do not coincide with each other in a top view, but pass each other.

A characteristic feature of the sloping cylindrical layered wall structure is a much greater exposure of the whole panel surfaces to light and rainwater because the panel fronts, depending on the plane of the arch, are distancing from each other and do not remain in one plane as in the flat vertical, cylindrical layered wall.

The joining gap between whole, half or complementary panels is filled with a joining strip equipped with expansion joints located on both sides of the strip and is placed by pressing between the edges of the panels. The layer of the substrate is thick in the range of 15 to 35 cm. The silos joining the layers are fully filled on three sides, while their front is covered with a fine weave mesh. The silos have an inclination angle of 30 to 90 degrees as seen in a side view of the structure, and panels with a hole for the silo together with the silo located there are placed every third whole panel without a hole, within a given layer made of panels. The silos have holes for combs made of rods which are put from three sides at fixed distances at the height of the silo.

The irrigation system is installed in all the module panels forming together layers and the panel-modular system. On each layer there is a separate controller that doses the amount of water due to the requirements of the plants placed there. The irrigation system is connected to a continuous water supply or to a replenished tank with a pump which guarantees a continuous water supply to the irrigation system. The water supply varies depending on the season of the year, needs and type of plants, e.g. shade-loving or photophilic plants, spatial and climatic location of the structure. Rainwater is obtained by means of an appropriate scale of panel planes and configuration of layers, and through vertical silos it is distributed within the joint system of the layer wall, which, in the case of regular rainfall, may result in periodic shutdown of the irrigation system.

*On the layered wall created with the help of the system according to the invention,* plants are placed according to the principle of bipolarity. On the outer and better illuminated parts of the panel, photophilic plants are placed, and on the inner and lower layers of the structure, shade-loving plants.

## Claims

1. A panel-modular layered wall system used for shaping spatial structures wherein said system comprises an arrangement of horizontal layers, wherein each layer is configured by joining side-by-side panels (8) of various shapes, wherein said panels are enclosed by panel bands, (7), filled with substrate (17), and plants are planted into the surfaces of the substrate (17), according to the principle of bipolarity by which photophilic plants (24) are placed at the outer part of the panel (8) and the shade-loving plants (25) on the inner parts and lower layers of the arrangement wherein the panels are mounted on cantilevers (10,13) with variable supporting angles for forming the arrangement of the horizontal layers, wherein a maximum of three panels (8) are placed on a flat (9) or bent module frame (36),
wherein the module frame (9) has a shape of a rhombus, a rectangle or a trapezium and is made of a closed profile with a rectangular cross-section
wherein the module frames are joined together along the perimeter by couplers (37) for forming a self-supporting wall layered structure of one of the following five variants a sloping load-bearing frame, an arched-barrel load-bearing frame, a spherical load-bearing frame, a cylindrical and a sloping cylindrical load-bearing frame, and
wherein individual panels(8) and layers, are joined together with silos (43) filled with the substrate (17).

2. The panel-modular system according to claim 1 is **characterised in that** the panels (8) are transparent (50) or opaque.

3. The panel-modular system according to claims 1 or 2 is **characterised in that**: the system comprises six basic panels (8), wherein the six panels are two whole panels (8) in the shape of a semicircle and of an isosceles triangle and four half panels, which are resulting from the division of said two basic shapes in two symmetrical triangles and two symmetrical quarters of a circle, respectively shaped on the sides, and wherein supplementary panels (8) placed on the flat or bent in the middle joined frames (9), of the modules used in one of five variants of the layered wall, forming a configuration of layers of panels (8) located directly one above the other, so that they do not coincide with each other in a top view, but pass one another within the entire layered wall structure.

4. The panel modular system according to claim 3 is **characterised in that**: when rhombus frames (9) are used for the construction of the sloping, arched-barrel, spherical, cylindrical and sloping cylindrical load-bearing frame of the layered wall, in the central part of the rhombus frame (9) is a whole panel, and above and below the whole panel, half panels on the load-bearing frame (9), the panels do not coincide with each other in the arrangement of layers of the structure, and when the load-bearing frame of the structure is made of rectangular or trapezium module frames (9), the panels are intentionally arranged in this way.

5. The panel-modular system according to claim 3 or 4 is **characterised in that**: the width of the whole panel (8)is identical to the width of the rhombus frame and when on the rhombus frame, half panels or two complementary panels next to each other are placed symmetrically, above and below the central panel at equal distances of the height of the rhombus frame (9), measuring from the base of the panel, then the width of these panels will always be half of the whole panel or complementary panel, as 1/4 of the whole panel, regardless of the adopted angle Alpha of the rhombus frame(9).

6. The panel-modular system according to claim 1 is **characterised in that**: the depth of six basic panels (8) for both sizes is the same.

7. The panel-modular system according to claims 1, 2 or 3 is **characterised in that**: whole panels (8) are joined both sides in width, at a 90 degrees angle to the plane of module frame at more than 1 /3 of the depth of each whole panel (8), while half panels are joined sideways at 1/3 of the depth of the whole panel (8) on one side and for the whole depth of the panel on the other side and the complementary panels (8) at 1/3 of the depth of the whole panel (8) or are joined sideways along the whole depth of the whole panel to the adjacent whole or half panel (8).

8. The panel-modular system according to any of the above claims is **characterised in that**: half panels (8) in the shape of a quarter of a circle or halves of the panel in the shape of an isosceles triangle (8) are rigidly combined into one whole panel by a mounting batten.

9. The panel-modular system according to any of claims 7 or 8 is **characterised in that**:
each panel (8) consists of a base and bands, encircling each panel with the exception for parts of both its sides along the panel (8) width, at 1 /3 of the panel depth, with which each panel (8) is butted on both sides with adjacent panels, mounted on adjacent module frames, forming the layer of panels horizontally, stretching along a given layered wall structure.

10. The panel-modular system according to claim 9 is **characterised in that**: the panel band (7) height is normally 1/4 of the whole panel depth in the case of mounting the panels together with the substrate and plants on three levels on the module frame (9) and up to 1/3 of the panel depth in the case of using two panels (8) or one panel together with the substrate and plants on the module frame (9).

11. The panel-modular system according to claim 1 is **characterised in that**: a guide bars (40) of the cantilevers (10,13), which enter into docking strips (41) on the underside of the panels (8), are mounted on the docking strips (41) by a lock (42), in particular a bolt or a plug, preventing the panel from moving.

12. The panel-modular system according to claim 1, is characterised that the joining gap between the panels (8) is filled with a joining strip (46) which is pressed into place by means of expansion joints between the edges of the panels, and wherein the joining strip (46) is equipped with drains that can be used together with vertical silos (43) or only if the silos are not used within a given structure or are used to join only some layers of the structure.

13. The panel-modular system according to claim 1 is **characterised in that**: in the plane of the panel (8) there is a polygonal-shaped hole in which there is the silo (43) of the corresponding shape, properly fitted and filled with the substrate (17), whose lower edge of the walls reaches below the band (7) of the panel (8) placed a level below on the panel layer, in such a way that the silo (43) filled with the substrate (17) rests against this layer, in particular wherein the silos (43) joining the layers of panels have an optimal inclination angle of 30 to 90 degrees and are usable in all variants.

14. The panel-modular system according to claim 1 is **characterised in that**: the flat (9) or bent module frames (36) in the shape of a rhombus (9), a rectangle or a trapezium are joined by means of "u" shaped couplers (37) with welded two threaded pins located in the inner part of the clamp, with which we join the edges of the frames by screwing nuts in marked holes on the rhombus or rectangular frame (9).

15. The panel-modular system according to claim 2 or 3 is **characterised in that**: on the vertical elements of trellises of the frames in the shape of a rhombus (9) a rectangle and a trapezium and the shapes resulting from their division, there are mounting holes (12) for cantilevers (10), at regular distances from the top to the bottom of the frame (9), which correspond to the spacing of the mounting hooks (11) of the cantilevers (10) supporting the panels in 3 types of layered wall structures, thus the distances between the created planes of layers of the panels (8) can vary within the structure.

## Patentansprüche

1. Paneel-modulares Schichtwandsystem, das zur Formung von Raumstrukturen verwendet wird, wobei das System eine Anordnung von horizontalen Schichten umfasst, wobei jede Schicht durch Aneinanderfügen von nebeneinanderliegenden Paneelen (8) verschiedener Formen ausgebildet ist, wobei die Paneele von Paneelbändern (7) umgeben sind, mit Substrat (17) gefüllt sind und Pflanzen in die Oberflächen des Substrats (17) nach dem Prinzip der Bipolarität eingepflanzt sind, wodurch lichtliebende Pflanzen (24) am äußeren Teil des Paneels (8) und schattenliebende Pflanzen (25) an den inneren Teilen und unteren Schichten der Anordnung angeordnet sind, wobei die Paneele an Auslegern (10, 13) mit variablen Stützwinkeln zur Bildung der Anordnung der horizontalen Schichten montiert sind, wobei maximal drei Paneele (8) an einem flachen (9) oder gebogenen Modulrahmen (36) angeordnet sind,
wobei der Modulrahmen (9) die Form eines Rhombus, eines Rechtecks oder eines Trapezes aufweist und aus einem geschlossenen Profil mit einem rechteckigen Querschnitt hergestellt ist,
wobei die Modulrahmen entlang des Umfangs durch Verbindungselemente (37) miteinander verbunden sind, um eine selbsttragende schichtförmige Wandstruktur einer der folgenden fünf Varianten zu bilden: ein geneigter Tragrahmen, ein tonnengewölbter Tragrahmen, ein sphärischer Tragrahmen, ein zylindrischer und ein geneigter zylindrischer Tragrahmen, und wobei einzelne Paneele (8) und Schichten mit Silos (43) miteinander verbunden sind, die mit dem Substrat (17) gefüllt sind.

2. Paneel-modulares System nach Anspruch 1, **dadurch gekennzeichnet, dass** die Paneele (8) transparent (50) oder opak sind.

3. Paneel-modulares System nach Anspruch 1 oder 2, **dadurch gekennzeichnet, dass** das System sechs Basispaneele (8) umfasst, wobei die sechs Paneele zwei ganze Paneele (8) in Form eines Halbkreises und eines gleichschenkligen Dreiecks und vier Halbpaneele sind, die sich aus der Teilung der zwei Grundformen in zwei symmetrische Dreiecke bzw. zwei symmetrische Kreisviertel ergeben, die jeweils an den Seiten geformt sind, und wobei Ergänzungspaneele (8), die an den flachen oder in der Mitte gebogenen, verbundenen Rahmen (9) der in einer von fünf Varianten der Schichtwand verwendeten Module angeordnet sind, eine Konfiguration von Schichten von Paneelen (8) bilden, die direkt übereinander angeordnet sind, so dass sie in einer Draufsicht nicht miteinander zusammenfallen, sondern innerhalb der gesamten Schichtwandstruktur aneinander vorbeilaufen.

4. Paneel-modulares System nach Anspruch 3, **dadurch gekennzeichnet, dass**: wenn Rhombusrahmen (9) für den Bau des geneigten, tonnengewölbten, sphärischen, zylindrischen und geneigten zylindrischen Tragrahmens der Schichtwand verwendet werden, sich im zentralen Teil des Rhombusrahmens (9) ein ganzes Paneel befindet, und oberhalb und unterhalb des ganzen Paneels Halbpaneele am Tragrahmen (9), die Paneele in der Anordnung der Schichten der Struktur nicht miteinander zusammenfallen, und wenn der Tragrahmen der Struktur aus rechteckigen oder trapezförmigen Modulrahmen (9) hergestellt ist, die Paneele absichtlich auf diese Weise angeordnet sind.

5. Paneel-modulares System nach Anspruch 3 oder 4, **dadurch gekennzeichnet, dass**: die Breite des ganzen Paneels (8) identisch mit der Breite des Rhombusrahmens ist, und wenn am Rhombusrahmen Halbpaneele oder zwei komplementäre Paneele nebeneinander symmetrisch oberhalb und unterhalb des zentralen Paneels in gleichen Abständen der Höhe des Rhombusrahmens (9), gemessen von der Basis des Paneels, angeordnet sind, dann die Breite dieser Paneele immer die Hälfte des ganzen Paneels oder des komplementären Paneels, als 1/4 des ganzen Paneels, beträgt, unabhängig vom gewählten Winkel Alpha des Rhombusrahmens (9).

6. Paneel-modulares System nach Anspruch 1, **dadurch gekennzeichnet, dass**: die Tiefe von sechs Basispaneelen (8) für beide Größen gleich ist.

7. Paneel-modulares System nach den Ansprüchen 1, 2 oder 3, **dadurch gekennzeichnet, dass**: ganze Paneele (8) beidseitig in der Breite in einem 90-Grad-Winkel zur Ebene des Modulrahmens über mehr als 1/3 der Tiefe jedes ganzen Paneels (8) verbunden sind, während Halbpaneele seitlich bei 1/3 der Tiefe des ganzen Paneels (8) auf einer Seite und über die gesamte Tiefe des Paneels auf der anderen Seite verbunden sind, und die komplementären Paneele (8) bei 1/3 der Tiefe des ganzen Paneels (8) oder seitlich entlang der gesamten Tiefe des ganzen Paneels mit dem benachbarten ganzen Paneel oder Halbpaneel (8) verbunden sind.

8. Paneel-modulares System nach einem der vorhergehenden Ansprüche, **dadurch gekennzeichnet, dass**: Halbpaneele (8) in Form eines Kreisviertels oder Hälften des Paneels in Form eines gleichschenkligen Dreiecks (8) durch eine Montageleiste starr zu einem ganzen Paneel zusammengefügt sind.

9. Paneel-modulares System nach einem der Ansprüche 1, 7 oder 8, **dadurch gekennzeichnet, dass**: jedes Paneel (8) aus einer Basis und Bändern besteht, die jedes Paneel mit Ausnahme von Teilen beider seiner Seiten entlang der Breite des Paneels (8) bei 1/3 der Paneeltiefe umgeben, mit denen jedes Paneel (8) auf beiden Seiten an benachbarte Paneele anstößt, die an benachbarten Modulrahmen montiert sind, wodurch die Schicht von Paneelen horizontal gebildet wird, die sich entlang einer gegebenen Schichtwandstruktur erstreckt.

10. Paneel-modulares System nach Anspruch 9, **dadurch gekennzeichnet, dass**: die Höhe des Paneelbandes (7) im Fall der Montage der Paneele zusammen mit dem Substrat und Pflanzen auf drei Ebenen am Modulrahmen (9) typischerweise 1/4 der gesamten Paneeltiefe beträgt und bis zu 1/3 der Paneeltiefe im Fall der Verwendung von zwei Paneelen (8) oder eines Paneels zusammen mit dem Substrat und Pflanzen am Modulrahmen (9).

11. Paneel-modulares System nach Anspruch 1, **dadurch gekennzeichnet, dass**: Führungsschienen (40) der Ausleger (10, 13), die in Andockleisten (41) an der Unterseite der Paneele (8) eingreifen, an den Andockleisten (41) durch eine Arretierung (42), insbesondere einen Bolzen oder einen Stopfen, montiert sind, die ein Verschieben des Paneels verhindert.

12. Paneel-modulares System nach Anspruch 1, **dadurch gekennzeichnet, dass** der Verbindungsspalt zwischen den Paneelen (8) mit einer Verbindungsleiste (46) ausgefüllt ist, die mittels Dehnungsfugen zwischen den Rändern der Paneele eingepresst wird, und wobei die Verbindungsleiste (46) mit Abläufen versehen ist, die zusammen mit vertikalen Silos (43) verwendet werden können oder nur dann, wenn die Silos innerhalb einer gegebenen Struktur nicht verwendet werden oder verwendet werden, um nur einige Schichten der Struktur zu verbinden.

13. Paneel-modulares System nach Anspruch 1, **dadurch gekennzeichnet, dass**: in der Ebene des Paneels (8) eine vieleckig geformte Öffnung vorhanden ist, in der sich das Silo (43) der entsprechenden Form befindet, passgenau eingepasst und mit dem Substrat (17) gefüllt, dessen untere Kante der Wände bis unter das Band (7) des Paneels (8) reicht, das eine Ebene tiefer auf der Paneelschicht angeordnet ist, derart, dass das mit dem Substrat (17) gefüllte Silo (43) an dieser Schicht anliegt, insbesondere wobei die Silos (43), die die Schichten von Paneelen verbinden, einen optimalen Neigungswinkel von 30 bis 90 Grad aufweisen und in allen Varianten verwendbar sind.

14. Paneel-modulares System nach Anspruch 1, **dadurch gekennzeichnet, dass**: die flachen (9) oder gebogenen Modulrahmen (36) in Form eines Rhombus (9), eines Rechtecks oder eines Trapezes mittels U-förmiger Verbindungselemente (37) mit zwei angeschweißten Gewindestiften verbunden sind, die sich im inneren Teil der Klemme befinden, mit denen die Ränder der Rahmen durch Aufschrauben von Muttern in markierten Löchern am Rhombus- oder rechteckigen Rahmen (9) verbunden werden.

15. Paneel-modulares System nach Anspruch 1 und Anspruch 2 oder 3, **dadurch gekennzeichnet, dass**: an den vertikalen Elementen von Gittern der Rahmen in Form eines Rhombus (9), eines Rechtecks und eines Trapezes und den sich aus deren Teilung ergebenden Formen Montagelöcher (12) für Ausleger (10) in regelmäßigen Abständen von oben nach unten des Rahmens (9) vorhanden sind, die den Abständen der Montagehaken (11) der Ausleger (10) entsprechen, die die Paneele in 3 Typen von Schichtwandstrukturen stützen, wodurch die Abstände zwischen den erzeugten Ebenen von Schichten der Paneele (8) innerhalb der Struktur variieren können.

## Revendications

1. Système de paroi stratifiée modulaire à panneaux utilisé pour façonner des structures spatiales, dans lequel ledit système comprend un agencement de couches horizontales, dans lequel chaque couche est configurée en assemblant côte à côte des panneaux (8) de formes diverses, dans lequel lesdits panneaux sont entourés de bandes de panneaux (7), remplis de substrat (17), et des plantes sont plantées dans les surfaces du substrat (17), selon le principe de bipolarité par lequel des plantes héliophiles (24) sont placées au niveau de la partie extérieure du panneau (8) et les plantes sciaphiles (25) sur les parties intérieures et les couches inférieures de l'agencement, dans lequel les panneaux sont montés sur des consoles (10, 13) avec des angles de support variables pour former l'agencement des couches horizontales, dans lequel un maximum de trois panneaux (8) sont placés sur un cadre de module plat (9) ou courbé (36),
dans lequel le cadre de module (9) a la forme d'un losange, d'un rectangle ou d'un trapèze et est constitué d'un profilé fermé de section transversale rectangulaire,
dans lequel les cadres de module sont assemblés entre eux le long du périmètre par des coupleurs (37) pour former une structure de paroi stratifiée autoportante selon l'une des cinq variantes suivantes : une ossature porteuse inclinée, une ossature porteuse en berceau arqué, une ossature porteuse sphérique, une ossature porteuse cylindrique et une ossature porteuse cylindrique inclinée, et
dans lequel des panneaux individuels (8) et des couches sont assemblés entre eux au moyen de silos (43) remplis du substrat (17).

2. Système modulaire à panneaux selon la revendication 1, **caractérisé en ce que** les panneaux (8) sont transparents (50) ou opaques.

3. Système modulaire à panneaux selon les revendications 1 ou 2, **caractérisé en ce que** : le système comprend six panneaux de base (8), dans lequel les six panneaux sont deux panneaux entiers (8) sous la forme d'un demi-cercle et d'un triangle isocèle et quatre demi-panneaux, qui résultent de la division desdites deux formes de base en deux triangles symétriques et deux quarts de cercle symétriques, respectivement façonnés sur les côtés, et dans lequel des panneaux supplémentaires (8) placés sur les cadres assemblés plats ou courbés au milieu (9), des modules utilisés dans l'une des cinq variantes de la paroi stratifiée, formant une configuration de couches de panneaux (8) situés directement les uns au-dessus des autres, de sorte qu'ils ne coïncident pas entre eux en vue de dessus, mais se croisent les uns les autres au sein de l'ensemble de la structure de paroi stratifiée.

4. Système modulaire à panneaux selon la revendication 3, **caractérisé en ce que** : lorsque des cadres en losange (9) sont utilisés pour la construction de l'ossature porteuse inclinée, en berceau arqué, sphérique, cylindrique et cylindrique inclinée de la paroi stratifiée, dans la partie centrale du cadre en losange (9) se trouve un panneau entier, et au-dessus et au-dessous du panneau entier, des demi-panneaux sur l'ossature porteuse (9), les panneaux ne coïncident pas entre eux dans l'agencement de couches de la structure, et lorsque l'ossature porteuse de la structure est constituée de cadres de module rectangulaires ou en trapèze (9), les panneaux sont intentionnellement agencés de cette manière.

5. Système modulaire à panneaux selon la revendication 3 ou 4, **caractérisé en ce que** : la largeur du panneau entier (8) est identique à la largeur du cadre en losange et lorsque, sur le cadre en losange, des demi-panneaux ou deux panneaux complémentaires adjacents sont placés symétriquement, au-dessus et au-dessous du panneau central à des distances égales de la hauteur du cadre en losange (9), mesurée à partir de la base du panneau, alors la largeur de ces panneaux sera toujours la moitié du panneau entier ou panneau complémentaire, soit 1/4 du panneau entier, quel que soit l'angle Alpha adopté du cadre en losange (9).

6. Système modulaire à panneaux selon la revendication 1, **caractérisé en ce que** : la profondeur de six panneaux de base (8) pour les deux dimensions est identique.

7. Système modulaire à panneaux selon les revendications 1, 2 ou 3, **caractérisé en ce que** : des panneaux entiers (8) sont assemblés des deux côtés en largeur, à un angle de 90 degrés par rapport au plan du cadre de module sur plus de 1/3 de la profondeur de chaque panneau entier (8), tandis que les demi-panneaux sont assemblés latéralement à 1/3 de la profondeur du panneau entier (8) d'un côté et sur toute la profondeur du panneau de l'autre côté et les panneaux complémentaires (8) à 1/3 de la profondeur du panneau entier (8) ou sont assemblés latéralement le long de toute la profondeur du panneau entier au panneau entier ou demi-panneau adjacent (8).

8. Système modulaire à panneaux selon l'une quelconque des revendications précédentes, **caractérisé en ce que** : des demi-panneaux (8) sous la forme d'un quart de cercle ou des moitiés du panneau sous la forme d'un triangle isocèle (8) sont rigidement combinés en un panneau entier par un liteau de montage.

9. Système modulaire à panneaux selon l'une quelconque des revendications 1, 7 ou 8, **caractérisé en ce que** : chaque panneau (8) est constitué d'une base et de bandes, entourant chaque panneau à l'exception de parties de ses deux côtés le long de la largeur du panneau (8), à 1/3 de la profondeur du panneau, avec lesquelles chaque panneau (8) est abouté sur les deux côtés avec des panneaux adjacents, montés sur des cadres de module adjacents, formant la couche de panneaux horizontalement, s'étendant le long d'une structure de paroi stratifiée donnée.

10. Système modulaire à panneaux selon la revendication 9, **caractérisé en ce que** : la hauteur de bande de panneau (7) est normalement de 1/4 de la profondeur du panneau entier dans le cas d'un montage des panneaux conjointement avec le substrat et les plantes sur trois niveaux sur le cadre de module (9) et jusqu'à 1/3 de la profondeur du panneau dans le cas de l'utilisation de deux panneaux (8) ou d'un panneau conjointement avec le substrat et les plantes sur le cadre de module (9).

11. Système modulaire à panneaux selon la revendication 1, **caractérisé en ce que** : des barres de guidage (40) des consoles (10, 13), qui pénètrent dans des réglettes d'amarrage (41) sur la face inférieure des panneaux (8), sont montées sur les réglettes d'amarrage (41) par un verrou (42), en particulier un boulon ou un bouchon, empêchant le panneau de se déplacer.

12. Système modulaire à panneaux selon la revendication 1, **caractérisé en ce que** l'interstice de jonction entre les panneaux (8) est rempli d'une bande de jonction (46) qui est pressée en place au moyen de joints de dilatation entre les bords des panneaux, et dans lequel la bande de jonction (46) est équipée d'évacuations qui peuvent être utilisées conjointement avec des silos verticaux (43) ou uniquement si les silos ne sont pas utilisés au sein d'une structure donnée ou sont utilisés pour joindre seulement certaines couches de la structure.

13. Système modulaire à panneaux selon la revendication 1, **caractérisé en ce que** : dans le plan du panneau (8) se trouve un orifice de forme polygonale dans lequel se trouve le silo (43) de forme correspondante, convenablement ajusté et rempli du substrat (17), dont le bord inférieur des parois atteint sous la bande (7) du panneau (8) placé un niveau en dessous sur la couche de panneau, de telle manière que le silo (43) rempli du substrat (17) repose contre cette couche, en particulier dans lequel les silos (43) reliant les couches de panneaux présentent un angle d'inclinaison optimal de 30 à 90 degrés et sont utilisables dans toutes les variantes.

14. Système modulaire à panneaux selon la revendication 1, **caractérisé en ce que** : les cadres de module plats (9) ou courbés (36) sous la forme d'un losange (9), d'un rectangle ou d'un trapèze sont reliés au moyen de coupleurs en forme de « u » (37) avec deux tiges filetées soudées situées dans la partie interne de la bride, avec lesquelles les bords des cadres sont reliés en vissant des écrous dans des trous repérés sur le cadre en losange ou rectangulaire (9).

15. Système modulaire à panneaux selon la revendication 1 et la revendication 2 ou 3, **caractérisé en ce que** : sur les éléments verticaux de treillis des cadres sous la forme d'un losange (9), d'un rectangle et d'un trapèze et des formes résultant de leur division, se trouvent des trous de montage (12) pour consoles (10), à des distances régulières du haut vers le bas du cadre (9), qui correspondent à l'espacement des crochets de montage (11) des consoles (10) soutenant les panneaux dans 3 types de structures de paroi stratifiée, ainsi les distances entre les plans créés de couches des panneaux (8) peuvent varier au sein de la structure.
